(19)

**Europäisches Patentamt**
**European Patent Office**
**Office européen des brevets**

(11) **EP 4 260 129 B1**

(12) **EUROPEAN PATENT SPECIFICATION**

(45) Date of publication and mention
of the grant of the patent:
**07.05.2025 Bulletin 2025/19**

(21) Application number: **21847874.1**

(22) Date of filing: **23.12.2021**

(51) International Patent Classification (IPC):
*G02B 27/01* (2006.01)    *H04N 13/383* (2018.01)
*H04N 13/344* (2018.01)    *H04N 13/307* (2018.01)

(52) Cooperative Patent Classification (CPC):
**H04N 13/383; G02B 27/0172; H04N 13/307;**
**H04N 13/344**

(86) International application number:
**PCT/US2021/065054**

(87) International publication number:
**WO 2022/140658 (30.06.2022 Gazette 2022/26)**

(54) **REVERSE PASS-THROUGH GLASSES FOR AUGMENTED REALITY AND VIRTUAL REALITY DEVICES**

UMGEKEHRTE DURCHGANGSBRILLE FÜR VORRICHTUNGEN FÜR ERWEITERTE REALITÄT UND VIRTUELLE REALITÄT

LUNETTES DE CONVERGENCE DES MONDES RÉEL ET VIRTUEL POUR DISPOSITIFS DE RÉALITÉ AUGMENTÉE ET DE RÉALITÉ VIRTUELLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2020 US 202063129989 P**
**27.01.2021 US 202163142458 P**
**17.12.2021 US 202117555037**

(43) Date of publication of application:
**18.10.2023 Bulletin 2023/42**

(60) Divisional application:
**25167159.0**

(73) Proprietor: **META PLATFORMS TECHNOLOGIES, LLC**
**Menlo Park, CA 94025 (US)**

(72) Inventors:
• **MATSUDA, Nathan**
**Menlo Park, California 94025 (US)**
• **WHEELWRIGHT, Brian**
**Menlo Park, California 94025 (US)**
• **HEGLAND, Joel**
**Menlo Park, California 94025 (US)**
• **SARAGIH, Jason**
**Menlo Park, California 94025 (US)**
• **LOMBARDI, Stephen Anthony**
**Menlo Park, California 94025 (US)**
• **SIMON KREUZ, Tomas**
**Menlo Park, California 94025 (US)**
• **SAITO, Shunsuke**
**Menlo Park, California 94025 (US)**
• **ZOLLHOEFER, Michael**
**Menlo Park, California 94025 (US)**
• **HAYS, James Henry**
**Menlo Park, California 94025 (US)**
• **RAJ, Amit**
**Menlo Park, California 94025 (US)**

(74) Representative: **Murgitroyd & Company**
**165-169 Scotland Street**
**Glasgow G5 8PL (GB)**

(56) References cited:
**WO-A1-2018/005331      US-B1- 9 740 282**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 260 129 B1

• **XAVIER P BURGOS-ARTIZZU ET AL: "Real-time expression-sensitive HMD face reconstruction", 20151102; 1077952576 - 1077952576, 2 November 2015 (2015-11-02), pages 1 - 4, XP058077404, ISBN: 978-1-4503-3930-8, DOI: 10.1145/ 2820903.2820910**

# EP 4 260 129 B1

**Description**

TECHNICAL FIELD

The present disclosure is related to augmented reality (AR) and virtual reality (VR) devices including a reverse pass-through feature that provides a realistic view of a user's facial features to a forward onlooker. More specifically, the present disclosure provides an autostereoscopic external display for onlookers of an AR/VR headset user.

BACKGROUND

In the field of AR and VR devices, some devices include outward facing displays that provide a view for an onlooker of the images being displayed for the user of the device. While these configurations facilitate a better understanding for an onlooker of what a user of the AR or VR device is experiencing, it leaves the onlooker clueless as to what is the state of mind of the user or focus of attention of the user, such as if the user is attempting to speak to the onlooker using a pass-through mode and is not otherwise engaged in a virtual reality environment. Moreover, for such devices having outward facing displays, they are typically traditional, two-dimensional displays lacking the realistic view of a full bodied image of at least a portion of the user's face or head, such as to portray the accurate depth and distance of the user's face or head within the device. Documents US 9740282 B1 and WO 2018/005331 A1 disclose near-eye display devices including outward facing displays.

SUMMARY OF DISCLOSURE

In accordance with a first aspect of the present disclosure, there is provided a device, comprising: a near-eye display configured to provide an image to a subject; an eye imaging system configured to collect an image of the subject; and a light field display configured to provide an autostereoscopic image of a three-dimensional model of the subject to an onlooker, wherein the autostereoscopic image includes a perspective-corrected view of the subject from multiple viewpoints within a field of view of the light field display.

In some embodiments, the light field display comprises a pixel array and a multi-lenslet array, wherein the pixel array is configured to provide a segmented view of the subject to the multi-lenslet array, the segmented view including multiple portions of the field of view of the light field display at a selected viewpoint.

In some embodiments, the eye imaging system comprises two cameras to collect a binocular view of the subject.

In some embodiments, the device further comprises one or more processors and a memory storing instructions which, when executed by the one or more processors, generate a three dimensional representation of the subject from the image of the subject.

In some embodiments, the near-eye display provides the subject a three-dimensional representation of an environment, including the onlooker.

In some embodiments, the eye imaging system includes an infrared camera that receives the image from the subject in a reflective mode from a dichroic mirror adjacent to the light field display.

In some embodiments, the light field display comprises a micro lens array having multiple micro lenses arranged in a two-dimensional pattern having a pre-selected pitch to avoid cross-talk between the perspective-corrected view for two viewpoints, for the onlooker.

In some embodiments, the light field display further comprises an immersed stop adjacent to a micro lens array, the immersed stop including multiple apertures such that each aperture is aligned with a center of each micro lens in the micro lens array.

In some embodiments, wherein the light field display includes a pixel array split in multiple active segments, wherein each active segment in the pixel array has a dimension corresponding to a diameter of a refractive element in a multi-lenslet array.

In some embodiments, the device further comprises one or more processors and a memory storing instructions which, when executed by the one or more processors, cause the light field display to split a pixel array into multiple active segments, each active segment configured to provide a portion of the field of view of the light field display at a selected viewpoint for the onlooker.

In accordance with a second aspect of the present disclosure, there is provided a computer-implemented method, comprising: receiving, from one or more headset cameras, multiple images having at least two or more fields of view of a subject, wherein the subject is a headset user; extracting multiple image features from the images using a set of learnable weights; forming a three-dimensional model of the subject using the set of learnable weights; mapping the three-dimensional model of the subject onto an autostereoscopic display format that associates an image projection of the subject with a selected observation point for an onlooker; and providing, on a device display, the image projection of the subject when the onlooker is located at the selected observation point.

In some embodiments, extracting image features comprises extracting intrinsic properties of a headset camera used to collect each of the images.

In some embodiments, mapping the three-dimensional model of the subject onto an autostereoscopic display format comprises interpolating a feature map associated with a first observation point with a feature map associated with a second observation point.

In some embodiments, mapping the three-dimensional model of the subject onto an autostereoscopic display format comprises aggregating the image features for multiple pixels along a direction of the selected observation point.

In some embodiments, mapping the three-dimensional model of the subject onto an autostereoscopic display format comprises concatenating multiple feature maps produced by each of the headset cameras in a permutation invariant combination, each of the headset cameras having an intrinsic characteristic.

In some embodiments, providing the image projection of the subject comprises providing, on the device display, a second image projection as the onlooker moves from a first observation point to a second observation point.

In accordance with a third aspect of the present disclosure, there is provide a computer-implemented method for training a model to provide a view of a subject to an auto stereoscopic display in a virtual reality headset, comprising: collecting, from a face of multiple users, multiple ground-truth images; rectifying the ground-truth images with stored, calibrated stereoscopic pairs of images; mapping a three-dimensional model of the subject onto an autostereoscopic display format that associates an image projection of the subject with a selected observation point for an onlooker; determining a loss value based on a difference between the ground-truth images and the image projection of the subject; and updating the three-dimensional model of the subject based on the loss value.

In some embodiments, generating multiple synthetic views comprises projecting image features from each of the ground-truth images along a selected observation direction and concatenating multiple feature maps produced by each of the ground-truth images in a permutation invariant combination, each of the ground-truth images having an intrinsic characteristic.

In some embodiments, training the three-dimensional model of the subject comprises updating at least one in a set of learnable weights for each of multiple features based on a value of a loss function indicative of the difference between the ground-truth images and the image projection of the subject.

In some embodiments, training the three-dimensional model of the subject comprises training a background value for each of multiple pixels in the ground-truth images based on a pixel background value projected from the multiple ground-truth images.

In accordance with a fourth aspect of the present disclosure, there is provided a system includes a first means for storing instructions and a second means for executing the instructions to perform a method, the method includes receiving multiple two-dimensional images having at least two or more fields of view of a subject, extracting multiple image features from the two-dimensional images using a set of learnable weights, projecting the image features along a direction between a three-dimensional model of the subject and a selected observation point for an onlooker, and providing, to the onlooker, an autostereoscopic image of the three-dimensional model of the subject.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims

BRIEF DESCRIPTION OF THE FIGURES

FIG. 1A illustrates an AR or VR device including an autostereoscopic external display, according to some embodiments.

FIG. 1B illustrates a user of an AR or VR device as viewed by a forward onlooker, according to some embodiments.

FIG. 2 illustrates a detailed view of an eyepiece for an AR or VR device configured to provide a reverse pass-through view of the user's face to a forward onlooker, according to some embodiments.

FIGS. 3A-3D illustrate different aspects and components of a micro lens array used to provide a reverse pass-through view of an AR or a VR device user to a forward onlooker, according to some embodiments.

FIG. 4 illustrates a ray-tracing view through a light field display to provide a wide-angle, high resolution view of an AR or a VR device user to a forward onlooker, according to some embodiments.

FIGS. 5A-5D illustrate different aspects of a resolution power characteristic in a micro lens array used to provide a wide-angle, high resolution view of an AR or a VR device user, according to some embodiments.

FIG. 6 illustrates a 3D rendition of a portion of a face of an AR or VR device user, according to some embodiments.

FIG. 7 illustrates a block diagram of a model architecture used for a 3D rendition of a portion of a face of a VR/AR headset user, according to some embodiments.

FIGS. 8A-8D illustrate elements and steps in a method for training a model to provide a view of a portion of a user's face to an auto stereoscopic display in a virtual reality headset, according to some embodiments.

FIG. 9 illustrates a flowchart in a method for providing an autostereoscopic view of a face of a VR/AR headset user, according to some embodiments.

FIG. 10 illustrates a flowchart in a method for rendering a three-dimensional (3D) view of a portion of a user's face from multiple, two-dimensional (2D) images of a portion of the user's face.

FIG. 11 illustrates a flowchart in a method for training a model to render a three-dimensional (3D) view of a portion of a user's face from multiple, two-dimensional (2D) images of a portion of the user's face, according to some embodiments.

FIG. 12 illustrates a computer system configured to perform at least some of the methods for using an AR or VR device, according to some embodiments.

In the figures, like elements are labeled likewise, according to their description, unless explicitly stated otherwise.

DETAILED DESCRIPTION

In the following detailed description, numerous specific details are set forth to provide a full understanding of the present disclosure. It will be apparent, however, to one ordinarily skilled in the art, that embodiments of the present disclosure may be practiced without some of these specific details. In other instances, well-known structures and techniques have not been shown in detail so as not to obscure the disclosure.

In the field of AR and VR devices and uses thereof, there exists a disconnection between the user and the environment that may be annoying to people surrounding the user, if not hazardous for the user and others nearby. In some scenarios, it may be desirable for the user to engage one or more onlookers for conversation, or attention. Current AR and VR devices lack the ability for onlookers to engage and to verify the focus of attention of the user.

Typically, display applications trying to match a wide-angle field of view or three-dimensional displays with a deep focal distance need to compromise on spatial resolution of the display. One approach is to reduce the size of the pixels in the display to increase the resolution; however, the pixel size in current state-of-the-art technology is reaching the diffraction limit of visible and near infrared light, which imposes a limit to the ultimate resolution that can be achieved. In the case of AR and VR devices, this compromise between spatial resolution and angular resolution is less constringent, given the limited ranges associated with the form factor and angular dimensions involved in these devices.

A desirable feature of an AR/VR device is to have a small form factor. Accordingly, thinner devices are desirable. To achieve this, multi-lenslet array (MLA) light field displays, having a shorter working distance, provide a thin cross section of a VR headset with limited resolution loss by using convenient designs of holographic pancake lenses.

Another desirable feature of an AR/VR device is to provide high resolution. Although this imposes a limit on the depth of focus, this limitation, common in optical systems used to capture complex scenery, is less stringent for an external display disclosed herein because the depth of field is limited by the relative location between the external display and the user's face, which varies little.

Embodiments as disclosed herein improve the quality of in-person interaction using VR headsets for a wide variety of applications wherein one or more people wearing a VR headset interact with one or more people not wearing a VR headset. Embodiments as discussed herein remove the friction between VR users and onlookers or other VR users, and bridge the gap between VR and AR: co-presence benefits of see-through AR with more finesse and higher immersion capacity of VR systems. Accordingly, embodiments as disclosed herein provide a compelling and more natural VR experience.

More generally, embodiments as disclosed herein provide an AR/VR headset that looks like a standard pair of see-through glasses to the onlooker, enabling a better engagement of the AR/VR user with the surrounding environment. This is highly helpful in scenarios where AR/VR users interact with other people or onlookers.

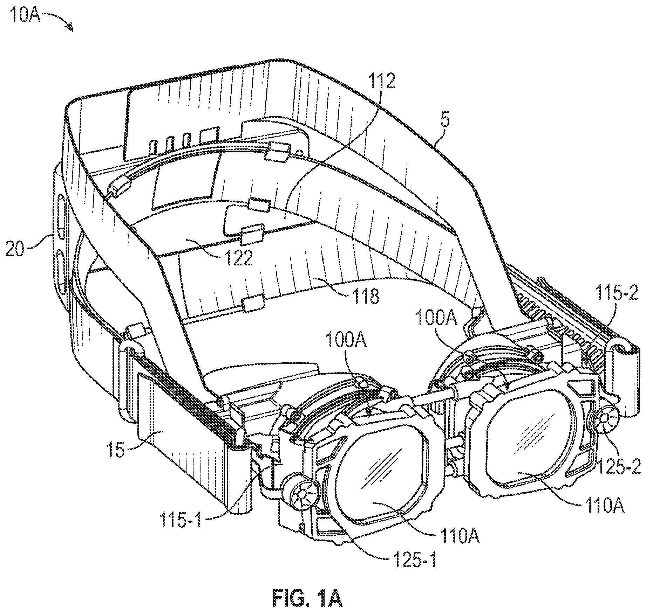

FIG. 1A illustrates a headset 10A including autostereoscopic external displays 110A, according to some embodiments. Headset 10A may be an AR or VR device configured to be mounted on a user's head. Headset 10A includes two eyepieces 100A mechanically coupled by a strap 15 and having a flexible mount to hold electronics components 20 in the back of the user's head. A flex connector 5 may electronically couple eyepieces 100A with electronic components 20. Each of eyepieces 100A include eye imaging systems 115-1 and 115-2 (hereinafter, collectively referred to as "eye imaging systems 115"), configured to collect an image of a portion of a face of the user reflected from an optical surface in a selected field of view (FOV). Eye imaging systems 115 may include dual eye cameras that collect two images of the eye of the user at different FOVs, so as to generate a three-dimensional, stereoscopic view of at least a portion of the user's face. Eye imaging systems 115 may provide information about pupil location and movement to the electronics components. Eyepieces 100A may also include external displays 110A (*e.g.,* a light field display) adjacent to the optical surface and configured to project an autostereoscopic image of the face of the user forward from the user.

In some embodiments, electronics components 20 may include a memory circuit 112 storing instructions and a processor circuit 122 that executes the instructions to receive the image of the portion of the face of the user from eye imaging systems 115, and provide to external displays 110A the autostereoscopic image of the face of the user. Moreover, electronics components 20 may also receive the image from the portion of the user's face from the one or more eye cameras, and apply image analysis to assess gaze, vergence, and focus by the user on an aspect of the exterior view, or a virtual reality display. In some embodiments, electronics components 20 include a communications module 118 configured to communicate with a network. Communications module 118 may include radio-frequency software and hardware to wirelessly communicate memory 112 and processor 122 with an external network, or some other device. Accordingly, communications module 118 may include radio antennas, transceivers, and sensors, and also digital processing circuits for signal processing according to any one of multiple wireless protocols such as Wi-Fi, Bluetooth, Near field contact (NFC), and the like. In addition, communications module 118 may also communicate with other input tools and accessories cooperating with headset 10A (*e.g.,* handle sticks, joysticks, mouse, wireless pointers, and the like).

In some embodiments, eyepieces 100A may include one or more exterior cameras 125-1 and 125-2 (hereinafter, collectively referred to as "exterior cameras 125") to capture a front view of a scene for the user. In some embodiments, exterior cameras 125 may focus or be directed to (*e.g.,* by processor 122) aspects of the front view that the user may be particularly interested in, based on the gaze, vergence, and other features of the user's view that may be derived from the image of the portion of the user's face provided by the dual eye camera.

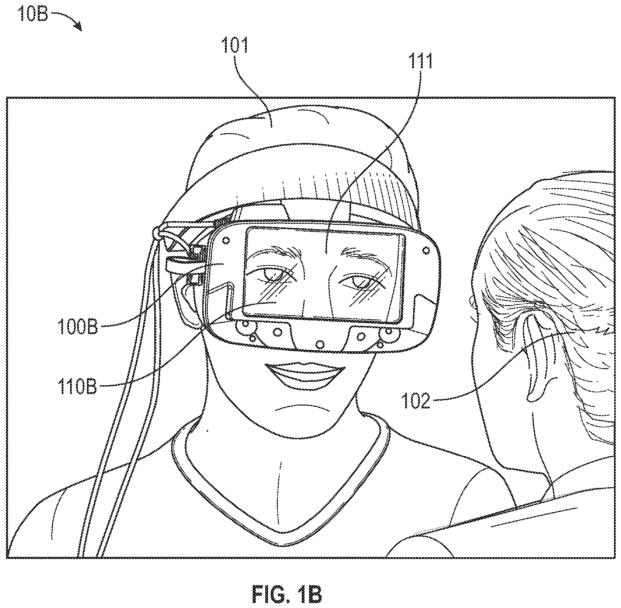

FIG. 1B illustrates a headset 10B as viewed by a forward onlooker, according to some embodiments. In some embodiments, headset 10B may be an AR or VR device in a "snorkel" configuration. Hereinafter, headsets 10A and 10B will be collectively referred to as "headsets 10." In some embodiments, a visor 100B may include a single forward display 110B that provides a view of user 101 to an onlooker 102. Display 110B includes a portion of the face having the two eyes, a portion of the nose, eyebrows, and other facial features of user 101. Further, an autostereoscopic image 111 of the user's face may include details such as an accurate and real-time position of the user's eyes, indicating a gaze direction and a vergence or focus of attention of user 101. This may indicate to onlooker 102 whether the user is paying attention to something that has been said, or some other environmental disturbance or sensorial input that may draw the user's attention.

In some embodiments, autostereoscopic image 111 offers a 3D rendering of the face of the user. Accordingly, onlooker 102 has a full body view of the user's face and even the user's head, changing perspective as onlooker 102 changes an angle of view. In some embodiments, the outwardly projected display 110B may include image features additional to the image of a portion of the user's face. For example, in some embodiments, the outwardly projected display may include virtual elements in the image superimposed to the image of the user's face (*e.g.,* a reflection or glare of the virtual image that the user is actually viewing, or of a real light source in the environment).

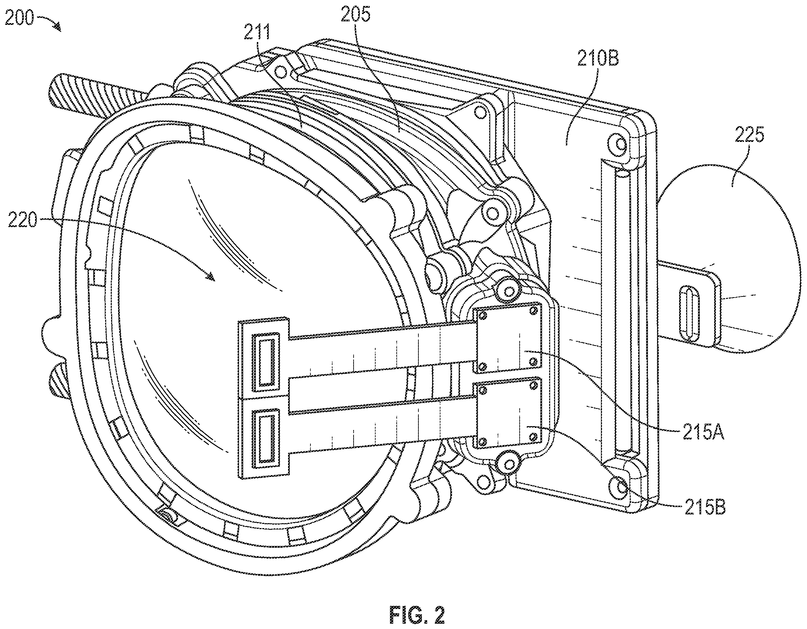

FIG. 2 illustrates a detailed view of an eyepiece 200 for an AR or VR device configured to provide a reverse pass-through view of the user's face to a forward onlooker (*cf.* eyepieces 100A and snorkel visor 100B), according to some embodiments. Eyepiece 200 includes an optical surface 220 configured to provide an image to a user on a first side (to the left) of optical surface 220. In some embodiments, the image to the user may be provided by a forward camera 225, and optical surface 220 may include a display coupled to forward camera 225. In some embodiments, the image in optical surface 220 may be a virtual image provided by a processor executing instructions stored in a memory (*e.g.,* for VR devices, memory 112 and processor 122). In some embodiments (*e.g.,* for AR devices), the image to the user may include, at least partially, an image transmitted from the front side of eyepiece 200 via transparent optical components (*e.g.,* lenses, waveguides, prisms, and the like).

In some embodiments, eyepiece 200 also includes a first eye camera 215A and a second eye camera 215B (hereinafter, collectively referred to as "eye cameras 215") configured to collect first and second images of the user's face (*e.g.,* the eye of the user) at two different FOVs. In some embodiments, eye cameras 215 may be infrared cameras collecting images of the user's face in reflection mode, from a hot mirror assembly 205. An illumination ring 211 may provide illumination to the portion of the user's face that is going to be imaged by eye cameras 215. Accordingly, optical surface 220 may be configured to be reflective at the wavelength of light operated by eye cameras 215 (*e.g.,* the infrared domain), and transmissive of light providing an image to the user, *e.g.,* the visible domain, including Red (R), Blue (B), and Green (G) pixels. A forward display 210B projects an autostereoscopic image of the face of the user to an onlooker (to the right end of the figure).

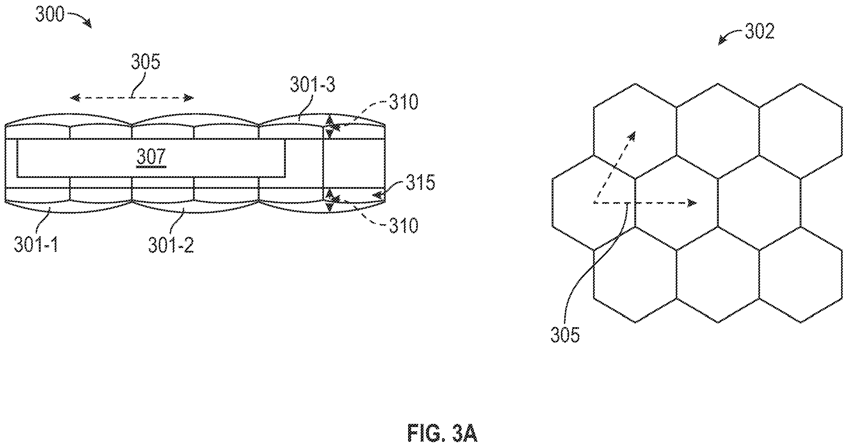

FIGS. 3A-3D illustrate different aspects and components of a micro lens array 300 used as a screen to provide a reverse pass-through view of a user in an AR or a VR device to a forward onlooker, according to some embodiments. In some embodiments, micro lens array 300 receives light from a pixel array 320 and provides the image of the face of the user to the onlooker. In some embodiments, the image of the face of the user is a perspective view of a 3D rendition of the face of the user, depending on the onlooker angle of view.

FIG. 3A is a detailed view of micro lens array 300 and includes multiple micro lenses 301-1, 301-2, and 301-3 (collectively referred to, hereinafter, as "micro lenses 301") arranged in a two-dimensional pattern 302 having a pitch 305. In some embodiments, an aperture mask 315 may be disposed adjacent to the micro lens array such that one aperture is aligned with each micro lens 301, to avoid cross-talk of different angles of view from the point of view of the onlooker.

For illustrative purposes only, pattern 302 is a hexagonal lattice of micro lenses 301 having a pitch 305 of less than a millimeter (*e.g.,* 500 $\mu$m). Micro lens array 300 may include a first surface and a second surface 310 including concavities forming micro lenses 301, the first and second surfaces 310 separated by a transmissive substrate 307 (*e.g.,* N-BK7 glass, plastic, and the like). In some embodiments, transmissive substrate 307 may have a thickness of about 200 $\mu$m.

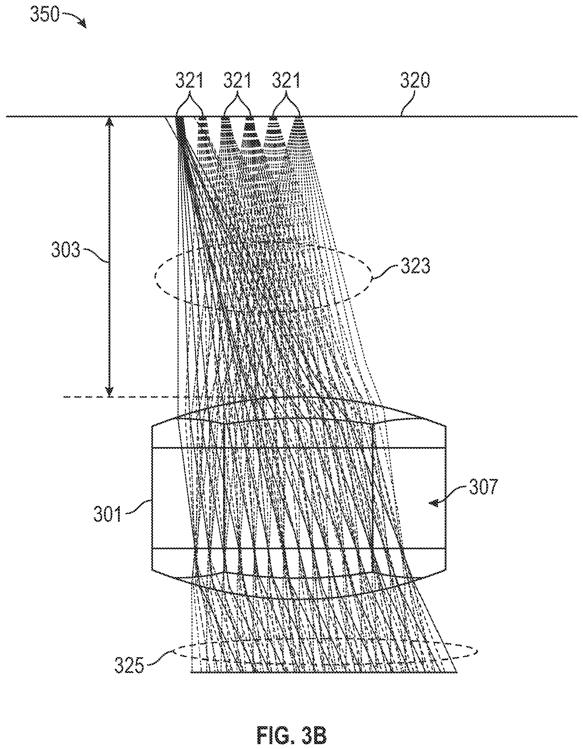

FIG. 3B is a detailed view of a light field display 350 for use in a reverse pass-through headset, according to some embodiments. Light field display 350 includes a pixel array 320 adjacent to a micro lens array (*e.g.,* micro lens array 300), of which only a micro lens 301 is shown, for illustrative purposes. Pixel array 320 includes multiple pixels 321 generating light beams 323 directed to micro lens 301. In some embodiments, a distance 303 between pixel array 320 and micro lens 301 may be approximately equal to the focal length of micro lens 301, and therefore outgoing light beams 325 may be collimated in different directions, depending on the specific position of the originating pixel 321. Accordingly, different pixels 321 in pixel array 320 may provide a different angle of view of a 3D representation of the user's face, depending on the location of the onlooker.

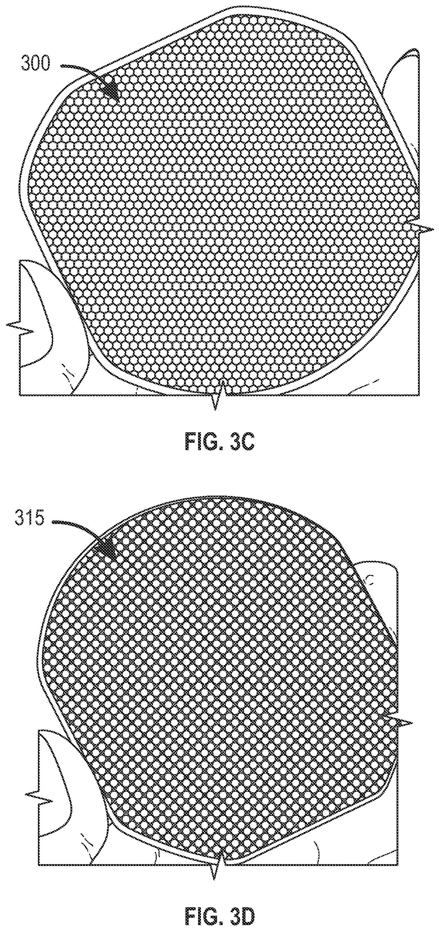

FIG. 3C is a plan view of micro lens array 300, showing a honeycomb pattern.

FIG. 3D illustrates micro lens array 300 with aperture mask 315 disposed adjacent to it so that openings on aperture mask 315 are centered on micro lens array 300. In some embodiments, aperture mask 315 may include chrome, having apertures of about 400 $\mu$m over a 500 $\mu$m hex-pack pitch (as illustrated). Aperture mask 315 may be lined up with the first surface or the second surface 310, on either side of micro lens array 300, or on both sides.

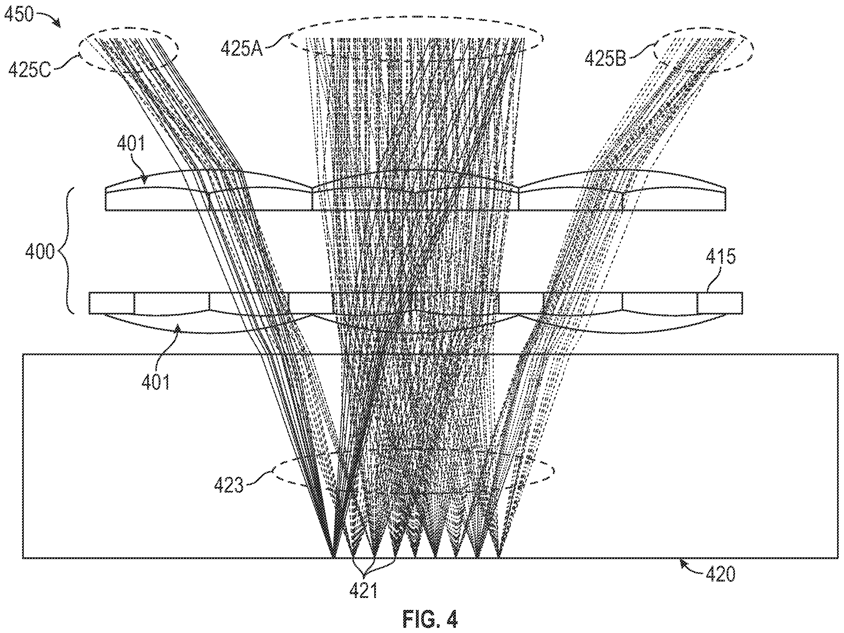

FIG. 4 illustrates a ray-tracing view of a light field display 450 to provide a reverse pass-through image of the face of a user of an AR/VR device to an onlooker, according to some embodiments. Light field display 450 includes a micro lens array 400 used to provide a wide-angle, high resolution view of the face of a user of an AR or a VR device, to a forward onlooker, according to some embodiments. Micro-lens array 400 includes multiple micro-lenses 401 arranged in a two-dimensional pattern, as disclosed herein. A pixel array 420 may include multiple pixels 421 providing light rays 423 that are transmitted through micro lens array 400 to generate a 3D rendition of at least a portion of a face of the user of the AR or VR device. Micro lens array 400 may include aperture mask 415. Aperture mask 415 provides blocking elements near the edges of each of the micro lenses in micro lens array 400. The blocking elements reduce the amount of light rays 425B and 425C relative to light rays 425A forming the front view of the user's face, for the onlooker. This reduces cross talk and ghosting effects for an onlooker situated in front of the screen and looking at the 3D rendition of the user's face (down, according to FIG. 4).

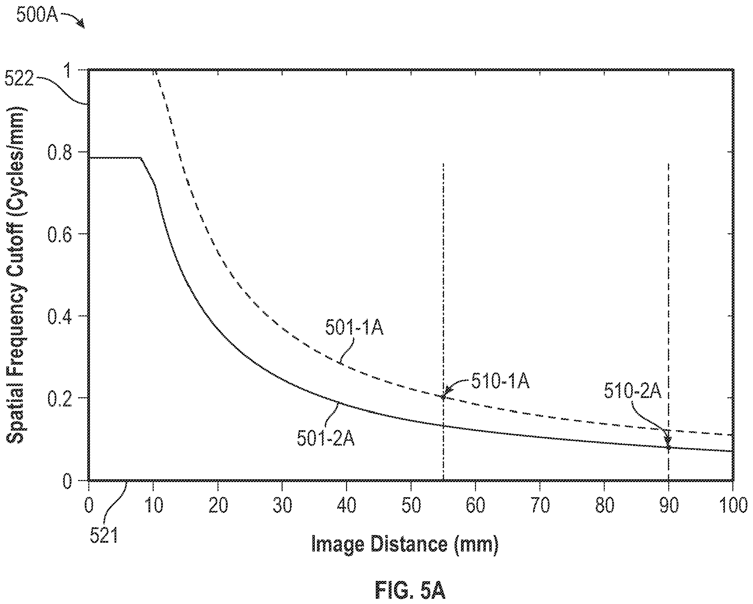

FIGS. 5A-5C illustrate different aspects of a resolution power characteristic 500A, 500B, and 500C (hereinafter, collectively referred to as "resolution power characteristics 500") in a micro lens array to provide a wide-angle, high resolution view of the face of a user of an AR or a VR device, according to some embodiments. The abscissae 521 (X-axis) in resolution power characteristics 500 indicates an image distance (in mm) between the user's face (*e.g.,* the eye of the user) and the micro lens array. The ordinates 522 (Y-axis) in resolution power characteristics 500 is the resolution of the optical system including the light display and the screen given in terms of a frequency value, *e.g.,* feature cycles on the display, per millimeter (cycles/mm), as viewed by an onlooker situated about a meter away from the user wearing the AR or VR device.

FIG. 5A illustrates resolution power characteristic 500A including a cutoff value, which is the highest frequency that the onlooker may distinguish from the display. Curves 501-1A and 501-2A (hereinafter, collectively referred to as "curves 501A") are associated with two different headset models (referred to as Model 1 and Model 2, respectively). The specific resolution depends on the image distance and other parameters of the screen, such as the pitch of the micro lens array (*e.g.,* pitch 305). In general, for a larger distance between the eye of the user and the screen, the resolution cutoff will monotonically decrease (to the right along abscissae 521). This is illustrated by the difference in cutoff values 510-2A (approx. 0.1 cycles/mm) for curve 501-2A, and 510-1A (approx. 0.25 cycles/mm) for curve 501-1A. Indeed, the headset model for curve 501-2A has a larger image distance (close to 10 cm between user face and display) than the headset model for curve 501-1A (about 5 cm between user eyes and display). Also, for a micro lens array having a wider pitch (Model 2, 500 $\mu$m pitch), the resolution cutoff will be reduced relative to a smaller pitch (Model 1, 200 $\mu$m pitch).

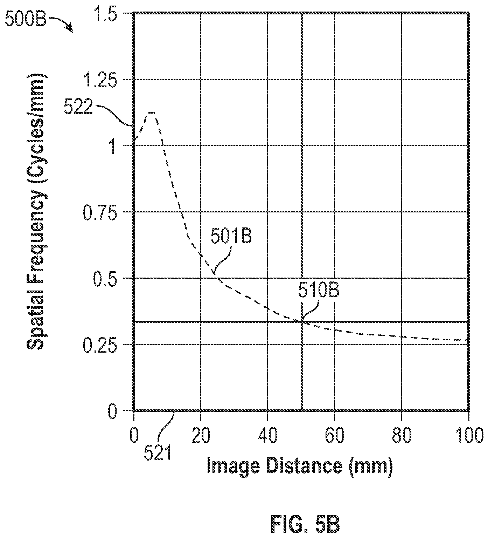

FIG. 5B illustrates resolution power characteristic 500B including a curve 501B for a light field display model (Model 3) providing a spatial frequency of about 0.3 cycles/mm with an image distance of about 5 cm at point 510B.

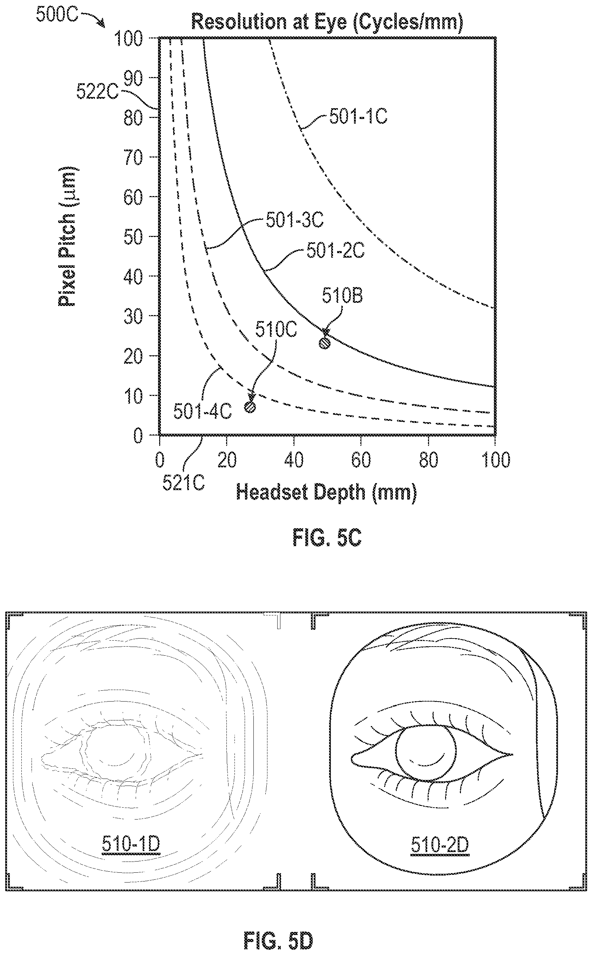

FIG. 5C illustrates resolution power characteristic 500C including curves 501-1C, 501-2C, 501-3C, and 501-4C (hereinafter, collectively referred to as "curves 501C"). The abscissae 521C (X-axis) for resolution power characteristics 500C indicates a headset depth (*e.g.,* similar to a distance between the user's eyes/face and the light field display), and the ordinates 522C (Y-axis) indicate a pixel pitch (in microns, $\mu$m) for the pixel array in the light field display. Each one of curves 501C indicates a number of cycles/mm cutoff resolution for each light field display model. Point 510B is illustrated in comparison with a better resolution obtained at point 510C for a light field display model (Model 4) with high density pixel packing (less than 10 $\mu$m pitch), and a close headset depth of about 25 mm (*e.g.,* about one inch or less).

FIG. 5D illustrates images 510-1D and 510-2D of the user wearing the headset according to an onlooker, for each of the light field display models. Image 510-1D is obtained with Model 3, and image 510-2D is obtained with Model 4, of the light field display (*cf.* points 510B and 510C, respectively). The resolution performance of Model 4 is certainly better than that of Model 3, indicating that there is a wide range of possibilities to accommodate a desired resolution in view of other trade-offs in terms of model design, consistent with the present disclosure.

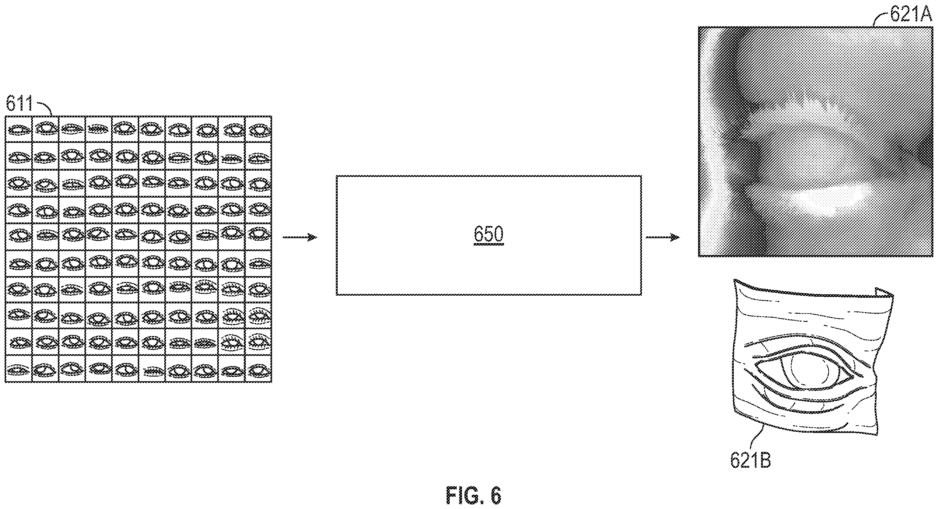

FIG. 6 illustrates a 3D rendition 621A and 621B (hereinafter, collectively referred to as "3D rendition 621") of a portion of a face of a user of an AR or VR device, according to some embodiments. In some embodiments, 3D rendition 621 is provided by a model 650 operating on multiple 2D images 611 of at least a portion of the user's face (*e.g.,* the eyes), and provided by an eye imaging system in the AR or VR device (*cf.* eye imaging system 115 and eye cameras 215). Model 650 may include linear and/or nonlinear algorithms such as neural networks (NN), convolutional neural networks (CNN), machine learning (ML) models, and artificial intelligence (AI) models. Model 650 includes instructions stored in a memory circuit and executed by a processor circuit. The memory circuit and the processor circuit may be stored in the back of the AR or VR device (*e.g.,* memory 112 and processor 122 in electronics components 20). Accordingly, multiple 2D images 611 are received from the eye imaging system to create, update, and improve model 650. The multiple 2D images include at least two different FOVs, *e.g.,* coming from each of two different stereoscopic eye cameras in the eye imaging system, and model 650 can determine which image came from which camera, to form 3D rendition 621. Model 650 then uses the 2D image input and detailed knowledge of the difference between the FOVs of the two eye cameras (*e.g.,* a camera direction vector) to provide 3D rendition 621 of at least a portion of the face of the user of the AR or VR device.

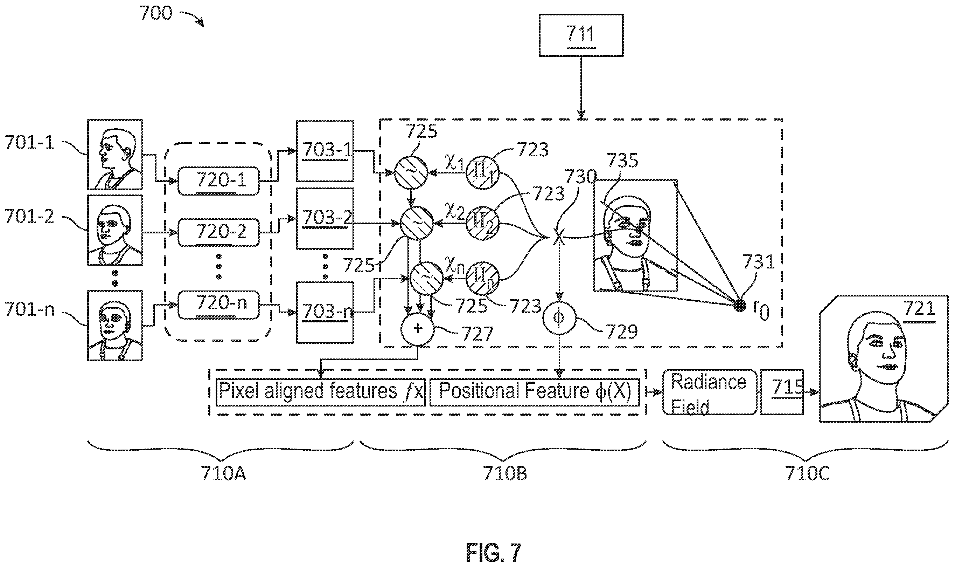

FIG. 7 illustrates a block diagram of a model architecture 700 used for a 3D rendition of a face portion of a VR/AR headset user, according to some embodiments. Model architecture 700 is a pixel aligned volumetric avatar (PVA) model. PVA model 700 is learned from a multi-view image collection that produces multiple, 2D input images 701-1, 701-2, and 701-n (hereinafter, collectively referred to as "input images 701). Each of input images 701 is associated with a camera view vector, $\mathbf{v}_i$ (*e.g.,* $\mathbf{v}_1$, $\mathbf{v}_2$ and $\mathbf{v}_n$), which indicates the direction of view of the user's face for that particular image. Each of vectors $\mathbf{v}_i$ is a known viewpoint 711, associated with camera intrinsic parameters, $\mathbf{K}_i$, and rotation, $\mathbf{R}_i$ (*e.g.,* $\{\mathbf{K}_i, [\mathbf{R}|t]_i\}$). Camera intrinsic parameters $\mathbf{K}_i$ may include brightness, color mapping, sensor efficiency, and other camera-dependent parameters. Rotation, $\mathbf{R}_i$, indicates the orientation (and distance) of the subject's head relative to the camera. The different camera sensors have a slightly different response to the same incident radiance despite the fact that they are the same camera model. If nothing is done to address this, the intensity differences end up baked into the scene representation *N*, which will cause the image to unnaturally brighten or darken from certain viewpoints. To address this, we learn a per-camera bias and gain value. This allows the system to have an 'easier' way to explain this variation in the data.

The value of 'n' is purely exemplary, as anyone with ordinary skills would realize that any number, n, of input images 701 can be used. PVA model 700 produces a volumetric rendition 721 of the headset user. Volumetric rendition 721 is a 3D model (*e.g.,* "avatar") that can be used to generate a 2D image of the subject from the target viewpoint. This 2D image changes as the target viewpoint changes (*e.g.,* as the onlooker moves around the headset user).

PVA model 700 includes a convolutional encoder-decoder 710A, a ray marching stage 710B, and a radiance field stage 710C (hereinafter, collectively referred to as "PVA stages 710"). PVA model 700 is trained with input images 701 selected from a multi-identity training corpus, using gradient descent. Accordingly, PVA model 700 includes a loss function defined between predicted images from multiple subjects and the corresponding ground truth. This enables PVA model 700 to render accurate volumetric renditions 721 independently of the subject.

Convolutional encoder-decoder network 710A takes input images 701 and produces pixel-aligned feature maps 703-1, 703-2, and 703-n (hereinafter, collectively referred to as "feature maps 703"). Ray marching stage 710B follows each of the pixels along a ray in target view j, defined by {Kj , [R|t]j}, accumulating color, c, and optical density ("opaqueness") produced by radiance field stage 710C at each point. Radiance field stage 710C (N) converts 3D location and pixel-aligned features to color and opacity, to render a radiance field 715 (c, σ).

Input images 701 are 3D objects having a height (*h*) and a width (*w*) corresponding to the 2D image collected by a camera along direction $\mathbf{v}_i$, and a depth of 3 layers for each color pixel R, G, B. Feature maps 703 are 3D objects having dimensions $h \times w \times d$. Encoder-decoder network 710A encodes input images 701 using learnable weights 721-1, 721-2... 721-n (hereinafter, collectively referred to as "learnable weights 721"). Ray marching stage 710B performs world to camera projections 723, bilinear interpolations 725, positional encoding 727, and feature aggregation 729.

In some embodiments, for a conditioning view $\mathbf{v}_i \in R^{h \times w \times 3}$ feature maps 703 may be defined as functions

$$f^{(i)} = N_{feat}(\boldsymbol{v}_i)$$
$$\{\boldsymbol{c}, \sigma\} = N(\varphi(\boldsymbol{X}), f_{\boldsymbol{X}}) \qquad (1)$$

where $\phi(\mathbf{X}): R^3 \rightarrow R^{6 \times 1}$ is the positional encoding of a point 730 ($\mathbf{X} \in R^3$) with $2 \times l$ different basis functions. Point 730 ($\mathbf{X}$), is a point along a ray directed from a 2D image of the subject to a specific viewpoint 731, $\mathbf{r}_0$. Feature maps 703 ($f^{(i)} \in R^{h \times w \times d}$) are associated with a camera position vector, $\mathbf{v}_i$, where *d* is the number of feature channels, *h* and *w* are image height and width, and $f_{\mathbf{X}} \in R^{d'}$ is an aggregated image feature associated with point $\mathbf{X}$. For each feature map $f^{(i)}$, ray marching stage 710B obtains $f_{\mathbf{X}} \in R^d$ by projecting 3D point $\mathbf{X}$ along the ray using camera intrinsic ($\mathbf{K}$) and extrinsic ($\mathbf{R}$, t) parameters of that particular viewpoint,

$$x_i = \prod (\boldsymbol{X};\; \boldsymbol{K}_i\,[\boldsymbol{R}|t]_i) \tag{3}$$

$$f_X^{(i)} = \mathcal{F}\big(f^{(i)};\; x_i\big) \tag{4}$$

where $\Pi$ is a perspective projection function to camera pixel coordinates, and F(f, x) is the bilinear interpolation 725 of $f$ at pixel location x. Ray marching stage 710B combines pixel-aligned features $f^{(i)}_X$ from multiple images for radiance field stage 710C.

For each given training image $\mathbf{v}_j$ with camera intrinsics $\mathbf{K}_j$ and rotation and translation $\mathbf{R}_j, \mathbf{t}_j$, the predicted color of a pixel p $\in$ R$^2$ for a given viewpoint in the focal plane of the camera and center 731 ($\mathbf{r}_0$) $\in$ R$^3$ is obtained by marching rays into the scene using the camera-to-world projection matrix, P$^{-1}$ = [$\mathbf{R}_i|\mathbf{t}_i$]$^{-1}$$\mathbf{K}^{-1}_i$ with the direction of the rays given by,

$$d = \frac{\boldsymbol{P}^{-1}\cdot p - \boldsymbol{r}_0}{\|\boldsymbol{P}^{-1}\cdot p - \boldsymbol{r}_0\|} \tag{5}$$

Ray marching stage 710B accumulates radiance and opacity values along a ray 735 defined by r($t$) = r$_0$ + $t$d for $t \in$ [$t_{near}$, $t_{far}$] as follows:

$$\boldsymbol{I}_{rgb}(p) = \int_{t_{near}}^{t_{far}} \boldsymbol{T}(t)\,\sigma\big(\boldsymbol{r}(t)\big)\boldsymbol{c}(\boldsymbol{r}(t),\boldsymbol{d})dt \tag{6}$$

Where,

$$\boldsymbol{T}(t) = \exp\left(-\int_{t_{near}}^{t} \sigma\big(\boldsymbol{r}(s)\big)ds\right) \tag{7}$$

In some embodiments, ray marching stage 710B uniformly samples a set of $n_s$ points t ~[$t_{near}$, $t_{far}$]. Setting $\mathbf{X} = \mathbf{r}(t)$ the quadrature rule may be used to approximate integrals 6 and 7. A function $\mathbf{I}_\alpha$(p) may be defined as

$$I_\alpha(p) = \sum_{i=1}^{n_s} \alpha_i \prod_{j=1}^{i}(1 - \alpha_j) \tag{8}$$

where $\alpha_i$= 1 - exp(-$\delta_i \cdot \sigma_i$) with $\delta_i$ being the distance between the *i+1*-th and *i-th* sample point along ray 735.

In a multi-view setting with known camera viewpoints, $\mathbf{v}_i$, and a fixed number of conditioning views ray marching stage 710B aggregates the features by simple concatenation. Concretely, for n conditioning images {$\mathbf{v}_i$}$^n_{i=1}$ with corresponding rotation and translation matrices given by {$\mathbf{R}_i$}$^n_{i=1}$ and {ti}ni=1, using features {f$^{(i)}\mathbf{x}$ }$^n_{i=1}$ for each point $\mathbf{X}$ as in Eq. (3), ray marching stage 710B generates the final feature as follows,

$$f_X = \left[ f_X^{(1)} \oplus f_X^{(2)} \dots \oplus f_X^{(n)} \right]$$

Where $\oplus$ represents a concatenation along the depth dimension. This preserves feature information from viewpoints, {$\mathbf{v}_i$}$^n_{i=1}$, helping PVA model 700 to determine the best combination and employ the conditioning information.

In some embodiments, PVA model 700 is agnostic to viewpoint and number of conditioning views. Simple concatenation as above is insufficient in this case, since the number of conditioning views may not be known *a priori,* leading to different feature dimensions (*d*) during inference time. To summarize features for a multi-view setting, some embodiments include a permutation invariant function G: R$^{n\times d}$ → R$^d$ such that for any permutation $\psi$,

$$G\big(f^{(1)}, \dots, f^{(n)}\big) = G([f^{\psi(1)}, f^{\psi(2)} \dots, f^{\psi(n)}])$$

A simple permutation invariant function for feature aggregation is the mean of the sampled feature maps 703. This aggregation procedure may be desirable when depth information during training is available. However, in the presence of depth ambiguity (e.g., for points that are projected onto feature map 703 before sampling), the above aggregation may lead to artifacts. To avoid this, some embodiments consider camera information to include effective conditioning in radiant field stage 710C. Accordingly, some embodiments include a conditioning function network $N_{cf}$: $R^{d+7}$ → $R^{d'}$ that takes the feature vector, $f^{(i)}_X$, and the camera information (ci) and produces a camera summarized feature vector $f'^{(i)}_X$. These modified vectors are then averaged over multiple, or all, conditioning views, as follows

$$ f'^{(i)}_X = N_{cf}\left(f^{(i)}_X, c_i\right) \qquad (9) $$

$$ f_X = \frac{1}{n}\sum_{i=1}^{n} f'^{(i)}_X \qquad (10) $$

The advantage of this approach is that the camera summarized features can take likely occlusions into account before the feature average is performed. The camera information is encoded as a 4D rotation quaternion and a 3D camera position.

Some embodiments may also include a background estimation network, $N_{bg}$, to avoid learning parts of the background in the scene representation. Background estimation network, $N_{bg}$, may be defined as: $N_{bg}$: $R^{nc}$→ $R^{h\times w\times 3}$ to learn a per-camera fixed background. In some embodiments, radiant field stage 710C may use $N_{bg}$ to predict the final image pixels as:

$$ I_p = I_{rgb} + (1 - I_\alpha) \cdot I_{bg} \qquad (11) $$

with $I_{bg} = \bar{I}_{bg} + N_{bg}(c_i)$ for camera $c_i$ where $\bar{I}_{bg}$ is an initial estimate of the background extracted using inpainting, and $I_\alpha$ is as defined by Eq. (8). These inpainted backgrounds are often noisy leading to 'halo' effects around the head of the person. To avoid this, $N_{bg}$ model learns the residual to the inpainted background. This has the advantage of not needing a high capacity network to account for the background.

For ground truth target images $v_j$, PVA model 700 trains both radiance field stage 710C and feature extraction network using a simple photo-metric reconstruction loss:

$$ \mathcal{L}_{photo} = \left\| I_{p_j} - v_j \right\|^2 $$

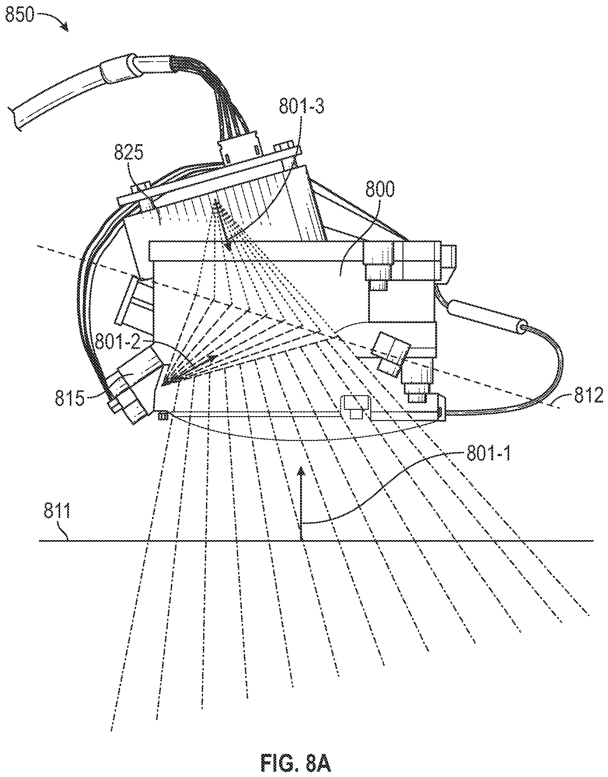

FIGS. 8A-8D illustrate elements and steps in a method for training a model to provide a view of a portion of a user's face to an autostereoscopic display in a virtual reality headset, according to some embodiments. An eyepiece 800 is trained with multiple training images 811 from multiple users. A 3D model 821 for each of the users is created including a texture map and a depth map to recover fine details of the image features 833-1B, 833-2B, and 833C (hereinafter, collectively referred to as "texture and depth maps 833"). When 3D model 821 is generated, an autostereoscopic image of the three-dimensional reconstruction of the user's face is provided to a pixel array in a light field display. The light field display is separated into multiple segments of active pixels, each segment providing a portion of a field of view of 3D model 821 in a selected angle of view for the onlooker.

FIG. 8A illustrates a setup 850 for collecting multiple training images 811 onto eyepiece 800, according to some embodiments. Training images 811 may be provided by a display, and projected onto a screen 812 disposed at the same location as the hot mirror will be when the eyepiece is assembled in the headset. One or more infrared cameras 815 collect training images 811 in reflection mode, and one or more RGB cameras 825 collect training images in transmission mode. Setup 850 has an image vector 801-1, an IR camera vector 801-2, and an RGB camera vector 801-3 (hereinafter, collectively referred to as "positioning vectors 801"), fixed for all training images 811. Positioning vectors 801 are used by the algorithm models to accurately assess sizes, distances, and angles of view associated with 3D model 821.

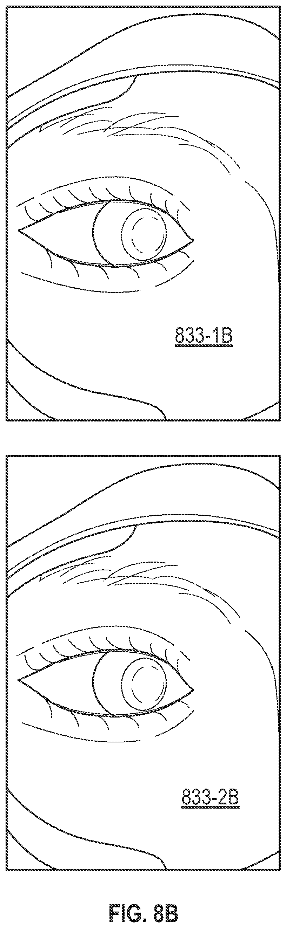

FIG. 8B illustrates texture and depth images 833-1B and 833-2B, according to some embodiments. Texture image 833-1B may be obtained from a capture of a training image using RGB camera 825, and depth image 833-2B may be obtained from a training image using IR camera 815.

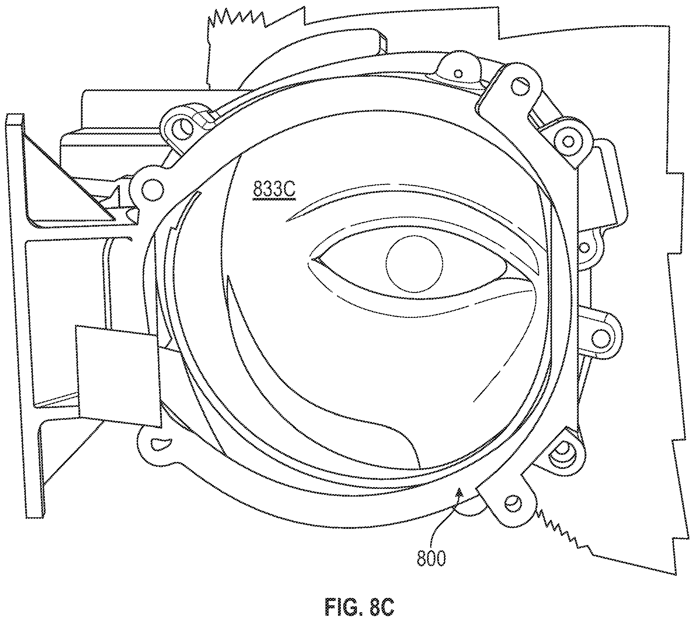

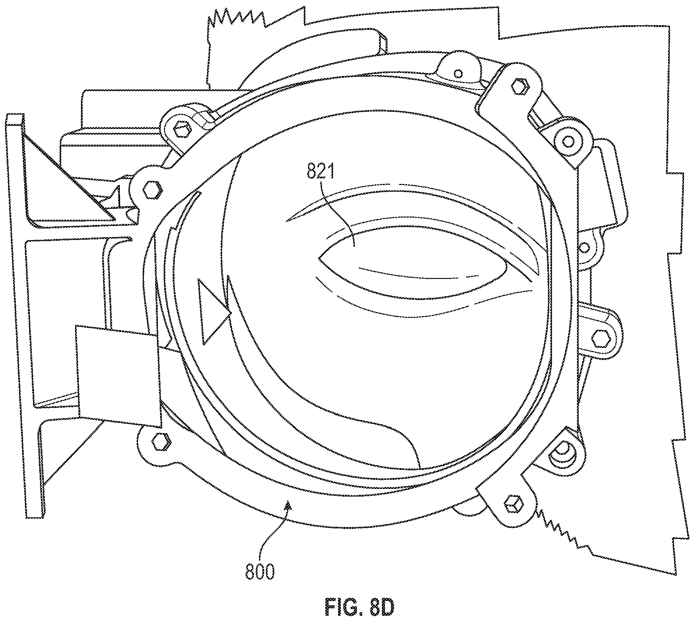

FIG. 8C illustrates a depth image 833C collected with IR camera 815, according to some embodiments. FIG. 8D illustrates 3D model 821 formed in relation to eyepiece 800, according to some embodiments.

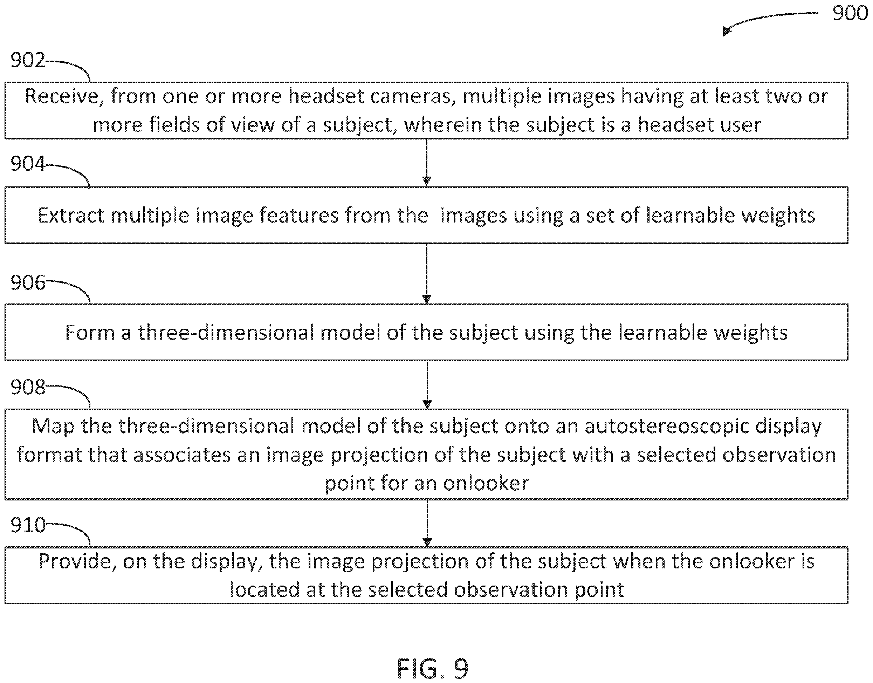

FIG. 9 illustrates a flowchart in a method 900 for providing an autostereoscopic view of a face of a VR/AR headset user, according to some embodiments. Steps in method 900 may be performed at least partially by a processor executing instructions stored in a memory, wherein the processor and the memory are part of electronics components in a headset as disclosed herein (*e.g.,* memory 112, processor 122, electronics components 20, and headsets 10). In yet other embodiments, at least one or more of the steps in a method consistent with method 900 may be performed by a processor executing instructions stored in a memory wherein at least one of the processor and the memory are remotely located in a cloud server, and the headset device is communicatively coupled to the cloud server via a communications module coupled to a network (*cf.* communications module 118). In some embodiments, method 900 may be performed using a model including a neural network architecture in a machine learning or artificial intelligence algorithm, as disclosed herein (*e.g.,* model 650, model architecture 700). In some embodiments, methods consistent with the present disclosure may include at least one or more steps from method 900 performed in a different order, simultaneously, quasi-simultaneously, or overlapping in time.

Step 902 includes receiving, from one or more headset cameras, multiple images having at least two or more fields of view of a subject, wherein the subject is a headset user.

Step 904 includes extracting multiple image features from images using a set of learnable weights. In some embodiments, step 904 includes matching the image features along a scan line to build a cost volume at a first resolution setting and to provide a coarse disparity estimate. In some embodiments, step 904 includes recovering one or more image features including small details and thin structures at a second resolution setting that is higher than the first resolution setting. In some embodiments, step 904 includes generating a texture map of the portion of the user's face and a depth map of the portion of the user's face based on the image features, wherein the texture map includes a color detail of the image features and the depth map includes a depth location of the image features. In some embodiments, step 904 includes extracting intrinsic properties of a headset camera used to collect each of the images.

Step 906 includes forming a three-dimensional model of the subject using the learnable weights.

Step 908 includes mapping the three-dimensional model of the subject onto an autostereoscopic display format that associates an image projection of the subject with a selected observation point for an onlooker. In some embodiments, step 908 includes providing, to one segment of a light field display, a portion of a field of view of the user's face at a selected viewpoint for the onlooker. In some embodiments, step 908 further includes tracking one or more onlookers to identify an angle of view and modify a light field display to optimize a field of view for each of the one or more onlookers. In some embodiments, step 908 includes interpolating a feature map associated with a first observation point with a feature map associated with a second observation point. In some embodiments, step 908 includes aggregating the image features for multiple pixels along a direction of the selected observation point. In some embodiments, step 908 includes concatenating multiple feature maps produced by each of the headset cameras in a permutation invariant combination, each of the headset cameras having an intrinsic characteristic.

Step 910 includes providing, on the display, the image projection of the subject when the onlooker is located at the selected observation point. In some embodiments, step 910 includes providing, on the device display, a second image projection as the onlooker moves from a first observation point to a second observation point.

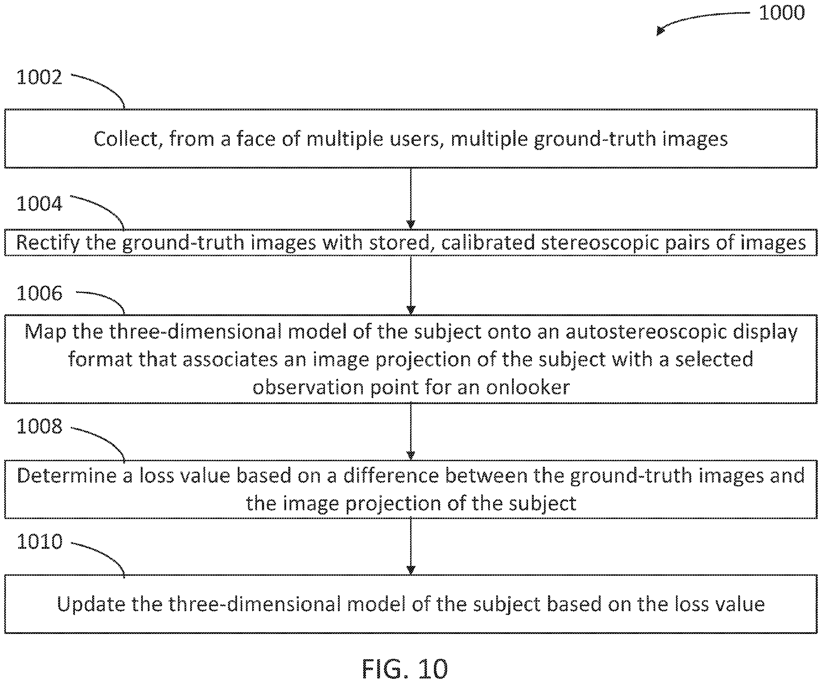

FIG. 10 illustrates a flowchart in a method 1000 for rendering a three-dimensional (3D) view of a portion of a user's face from multiple, two-dimensional (2D) images of a portion of the user's face. Steps in method 1000 may be performed at least partially by a processor executing instructions stored in a memory, wherein the processor and the memory are part of electronics components in a headset as disclosed herein (*e.g.,* memory 112, processor 122, electronics components 20, and headsets 10). In yet other embodiments, at least one or more of the steps in a method consistent with method 1000 may be performed by a processor executing instructions stored in a memory wherein at least one of the processor and the memory are remotely located in a cloud server, and the headset device is communicatively coupled to the cloud server via a communications module coupled to a network (*cf.* communications module 118). In some embodiments, method 1000 may be performed using a model including a neural network architecture in a machine learning or artificial intelligence algorithm, as disclosed herein (*e.g.,* model 650, model architecture 700). In some embodiments, methods consistent with the present disclosure may include at least one or more steps from method 1000 performed in a different order, simultaneously, quasi-simultaneously, or overlapping in time.

Step 1002 includes collecting, from a face of multiple users, multiple ground-truth images.

Step 1004 includes rectifying the ground-truth images with stored, calibrated stereoscopic pairs of images. In some embodiments, step 1004 includes extracting multiple image features from the two-dimensional images using a set of learnable weights. In some embodiments, step 1004 includes extracting intrinsic properties of a camera used to collect the two-dimensional images.

Step 1006 includes mapping the three-dimensional model of the subject onto an autostereoscopic display format that associates an image projection of the subject with a selected observation point for an onlooker. In some embodiments, step 1006 includes projecting the image features along a direction between a three-dimensional model of the subject and a selected observation point for an onlooker. In some embodiments, step 1006 includes interpolating a feature map associated with a first direction with a feature map associated with a second direction. In some embodiments, step 1006 includes aggregating the image features for multiple pixels along the direction between the three-dimensional model of the subject and the selected observation point. In some embodiments, step 1006 includes concatenating multiple feature maps produced by each of multiple cameras in a permutation invariant combination, each of the multiple cameras having an intrinsic characteristic.

Step 1008 includes determining a loss value based on a difference between the ground-truth images and the image projection of the subject. In some embodiments, step 1008 includes providing, to the onlooker, an autostereoscopic image of the three-dimensional model of the subject. In some embodiments, step 1008 includes evaluating a loss function based on a difference between the autostereoscopic image of the three-dimensional model of the subject and a ground truth image of the subject, and updating at least one of the set of learnable weights based on the loss function.

Step 1010 includes updating the three-dimensional model of the subject based on the loss value.

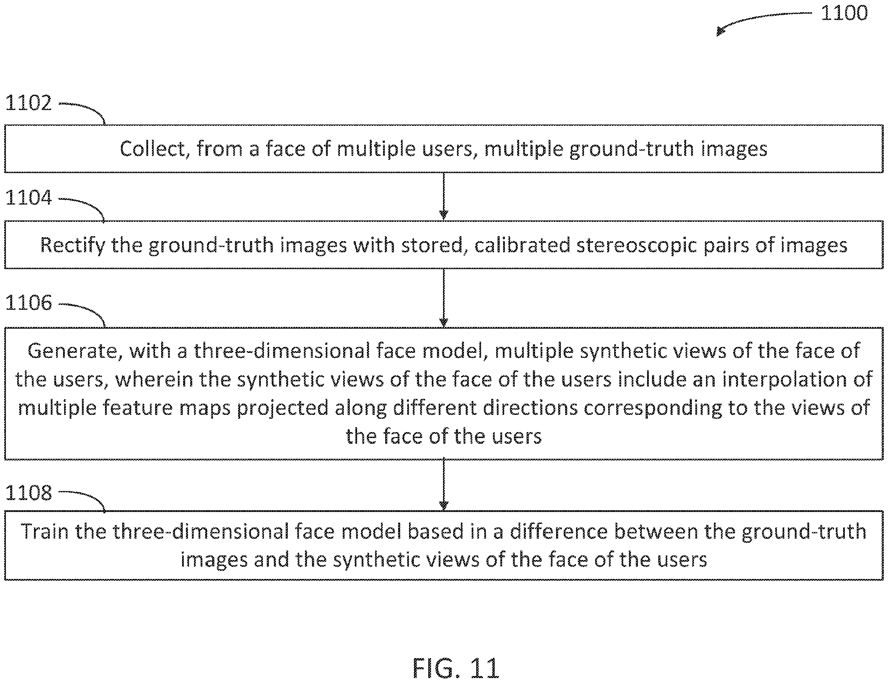

FIG. 11 illustrates a flowchart in a method 1100 for training a model to render a three-dimensional (3D) view of a portion of a user's face from multiple, two-dimensional (2D) images of a portion of the user's face, according to some embodiments. Steps in method 1100 may be performed at least partially by a processor executing instructions stored in a memory, wherein the processor and the memory are part of electronics components in a headset as disclosed herein (*e.g.,* memory 112, processor 122, electronics components 20, and headsets 10). In yet other embodiments, at least one or more of the steps in a method consistent with method 1100 may be performed by a processor executing instructions stored in a memory wherein at least one of the processor and the memory are remotely located in a cloud server, and the headset device is communicatively coupled to the cloud server via a communications module coupled to a network (*cf.* communications module 118). In some embodiments, method 1100 may be performed using a model including a neural network architecture in a machine learning or artificial intelligence algorithm, as disclosed herein (*e.g.,* model 650, model architecture 700). In some embodiments, methods consistent with the present disclosure may include at least one or more steps from method 1100 performed in a different order, simultaneously, quasi-simultaneously, or overlapping in time.

Step 1102 includes collecting, from a face of multiple users, multiple ground-truth images.

Step 1104 includes rectifying the ground-truth images with stored, calibrated stereoscopic pairs of images.

Step 1106 includes generating, with a three-dimensional face model, multiple synthetic views of subjects, wherein the synthetic views of subjects include an interpolation of multiple feature maps projected along different directions corresponding to multiple views of the subjects. In some embodiments, step 1106 includes projecting image features from each of the ground-truth images along a selected observation direction and concatenating multiple feature maps produced by each of the ground-truth images in a permutation invariant combination, each of the ground-truth images having an intrinsic characteristic.

Step 1108 includes training the three-dimensional face model based on a difference between the ground-truth images and the synthetic views of subjects. In some embodiments, step 1108 includes updating at least one in a set of learnable weights for each of multiple features in the feature maps based on a value of a loss function indicative of the difference between the ground-truth images and the synthetic views of subjects. In some embodiments, step 1108 includes training a background value for each of multiple pixels in the ground-truth images based on a pixel background value projected from the multiple ground-truth images.

## Hardware Overview

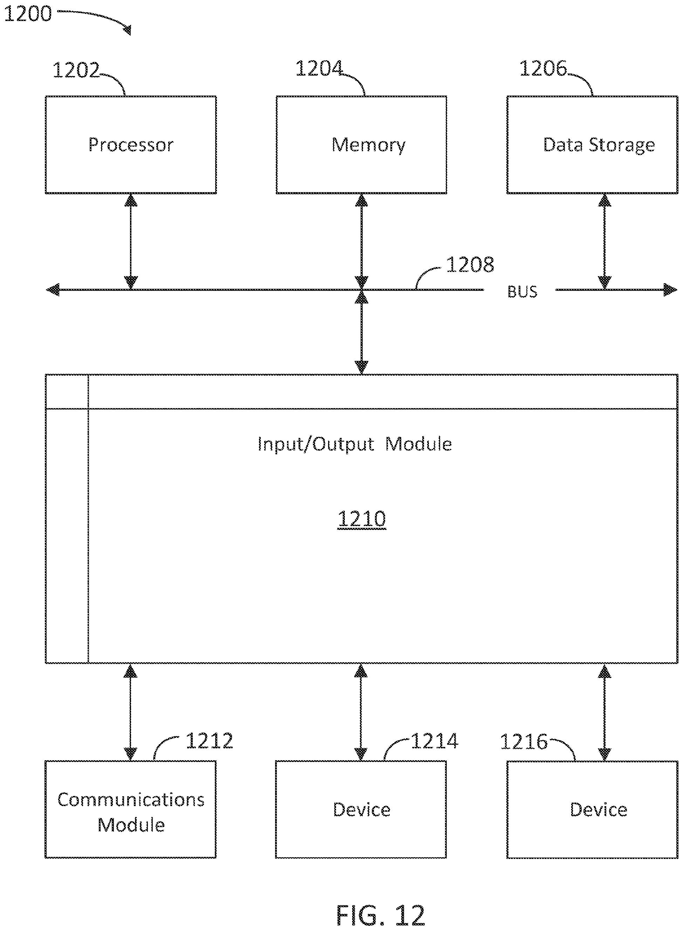

FIG. 12 is a block diagram illustrating an exemplary computer system 1200 with which headsets 10, and methods 900, 1000, and 1100 can be implemented. In certain aspects, computer system 1200 may be implemented using hardware or a combination of software and hardware, either in a dedicated server, or integrated into another entity, or distributed across multiple entities. Computer system 1200 may include a desktop computer, a laptop computer, a tablet, a phablet, a smartphone, a feature phone, a server computer, or otherwise. A server computer may be located remotely in a data center or be stored locally.

Computer system 1200 includes a bus 1208 or other communication mechanism for communicating information, and a processor 1202 (*e.g.,* processor 122) coupled with bus 1208 for processing information. By way of example, the computer system 1200 may be implemented with one or more processors 1202. Processor 1202 may be a general-purpose microprocessor, a microcontroller, a Digital Signal Processor (DSP), an Application Specific Integrated Circuit (ASIC), a Field Programmable Gate Array (FPGA), a Programmable Logic Device (PLD), a controller, a state machine, gated logic, discrete hardware components, or any other suitable entity that can perform calculations or other manipulations of information.

Computer system 1200 can include, in addition to hardware, code that creates an execution environment for the computer program in question, *e.g.,* code that constitutes processor firmware, a protocol stack, a database management system, an operating system, or a combination of one or more of them stored in an included memory 1204 (*e.g.,* memory 112), such as a Random Access Memory (RAM), a flash memory, a Read-Only Memory (ROM), a Programmable Read-Only Memory (PROM), an Erasable PROM (EPROM), registers, a hard disk, a removable disk, a CD-ROM, a DVD, or any other suitable storage device, coupled with bus 1208 for storing information and instructions to be executed by processor 1202. The processor 1202 and the memory 1204 can be supplemented by, or incorporated in, special purpose logic circuitry.

The instructions may be stored in the memory 1204 and implemented in one or more computer program products, *e.g.,* one or more modules of computer program instructions encoded on a computer-readable medium for execution by, or to control the operation of, the computer system 1200, and according to any method well known to those of skill in the art, including, but not limited to, computer languages such as data-oriented languages (*e.g.,* SQL, dBase), system languages (*e.g.,* C, Objective-C, C++, Assembly), architectural languages (*e.g.,* Java, .NET), and application languages (*e.g.,* PHP, Ruby, Perl, Python). Instructions may also be implemented in computer languages such as array languages, aspect-oriented languages, assembly languages, authoring languages, command line interface languages, compiled languages, concurrent languages, curly-bracket languages, dataflow languages, data-structured languages, declarative languages, esoteric languages, extension languages, fourth-generation languages, functional languages, interactive mode languages, interpreted languages, iterative languages, list-based languages, little languages, logic-based languages, machine languages, macro languages, metaprogramming languages, multiparadigm languages, numerical analysis, non-English-based languages, object-oriented class-based languages, object-oriented prototype-based languages, off-side rule languages, procedural languages, reflective languages, rule-based languages, scripting languages, stack-based languages, synchronous languages, syntax handling languages, visual languages, wirth languages, and xml-based languages. Memory 1204 may also be used for storing temporary variable or other intermediate information during execution of instructions to be executed by processor 1202.

A computer program as discussed herein does not necessarily correspond to a file in a file system. A program can be stored in a portion of a file that holds other programs or data (*e.g.,* one or more scripts stored in a markup language document), in a single file dedicated to the program in question, or in multiple coordinated files (*e.g.,* files that store one or more modules, subprograms, or portions of code). A computer program can be deployed to be executed on one computer or on multiple computers that are located at one site or distributed across multiple sites and interconnected by a communication network. The processes and logic flows described in this specification can be performed by one or more programmable processors executing one or more computer programs to perform functions by operating on input data and generating output.

Computer system 1200 further includes a data storage device 1206 such as a magnetic disk or optical disk, coupled with bus 1208 for storing information and instructions. Computer system 1200 may be coupled via input/output module 1210 to various devices. Input/output module 1210 can be any input/output module. Exemplary input/output modules 1210 include data ports such as USB ports. The input/output module 1210 is configured to connect to a communications module 1212. Exemplary communications modules 1212 include networking interface cards, such as Ethernet cards and modems. In certain aspects, input/output module 1210 is configured to connect to a plurality of devices, such as an input device 1214 and/or an output device 1216. Exemplary input devices 1214 include a keyboard and a pointing device, *e.g.,* a mouse or a trackball, by which a consumer can provide input to the computer system 1200. Other kinds of input devices 1214 can be used to provide for interaction with a consumer as well, such as a tactile input device, visual input device, audio input device, or brain-computer interface device. For example, feedback provided to the consumer can be any form of sensory feedback, *e.g.,* visual feedback, auditory feedback, or tactile feedback; and input from the consumer can be received in any form, including acoustic, speech, tactile, or brain wave input. Exemplary output devices 1216 include display devices, such as an LCD (liquid crystal display) monitor, for displaying information to the consumer.

According to one aspect of the present disclosure, headsets 10 can be implemented, at least partially, using a computer system 1200 in response to processor 1202 executing one or more sequences of one or more instructions contained in memory 1204. Such instructions may be read into memory 1204 from another machine-readable medium, such as data storage device 1206. Execution of the sequences of instructions contained in main memory 1204 causes processor 1202 to perform the process steps described herein. One or more processors in a multi-processing arrangement may also be employed to execute the sequences of instructions contained in memory 1204. In alternative aspects, hard-wired circuitry may be used in place of or in combination with software instructions to implement various aspects of the present disclosure. Thus, aspects of the present disclosure are not limited to any specific combination of hardware circuitry and software.

Various aspects of the subject matter described in this specification can be implemented in a computing system that includes a back end component, *e.g.,* a data server, or that includes a middleware component, *e.g.,* an application server, or that includes a front end component, *e.g.,* a client computer having a graphical consumer interface or a Web browser through which a consumer can interact with an implementation of the subject matter described in this specification, or any combination of one or more such back end, middleware, or front end components. The components of the system can be interconnected by any form or medium of digital data communication, *e.g.,* a communication network. The communication network can include, for example, any one or more of a LAN, a WAN, the Internet, and the like. Further, the communication network can include, but is not limited to, for example, any one or more of the following network topologies, including a bus network, a star network, a ring network, a mesh network, a star-bus network, tree or hierarchical network, or the like. The communications modules can be, for example, modems or Ethernet cards.

Computer system 1200 can include clients and servers. A client and server are generally remote from each other and typically interact through a communication network. The relationship of client and server arises by virtue of computer programs running on the respective computers and having a client-server relationship to each other. Computer system 1200 can be, for example, and without limitation, a desktop computer, laptop computer, or tablet computer. Computer system 1200 can also be embedded in another device, for example, and without limitation, a mobile telephone, a PDA, a mobile audio player, a Global Positioning System (GPS) receiver, a video game console, and/or a television set top box.

The term "machine-readable storage medium" or "computer-readable medium" as used herein refers to any medium or media that participates in providing instructions to processor 1202 for execution. Such a medium may take many forms, including, but not limited to, non-volatile media, volatile media, and transmission media. Non-volatile media include, for example, optical or magnetic disks, such as data storage device 1206. Volatile media include dynamic memory, such as memory 1204. Transmission media include coaxial cables, copper wire, and fiber optics, including the wires forming bus 1208. Common forms of machine-readable media include, for example, floppy disk, a flexible disk, hard disk, magnetic tape, any other magnetic medium, a CD-ROM, DVD, any other optical medium, punch cards, paper tape, any other physical medium with patterns of holes, a RAM, a PROM, an EPROM, a FLASH EPROM, any other memory chip or cartridge, or any other medium from which a computer can read. The machine-readable storage medium can be a machine-readable storage device, a machine-readable storage substrate, a memory device, a composition of matter affecting a machine-readable propagated signal, or a combination of one or more of them.

To illustrate the interchangeability of hardware and software, items such as the various illustrative blocks, modules, components, methods, operations, instructions, and algorithms have been described generally in terms of their functionality. Whether such functionality is implemented as hardware, software, or a combination of hardware and software depends upon the particular application and design constraints imposed on the overall system. Skilled artisans may implement the described functionality in varying ways for each particular application.

As used herein, the phrase "at least one of" preceding a series of items, with the terms "and" or "or" to separate any of the items, modifies the list as a whole, rather than each member of the list (*e.g.,* each item). The phrase "at least one of" does not require selection of at least one item; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The word "exemplary" is used herein to mean "serving as an example, instance, or illustration." Any embodiment described herein as "exemplary" is not necessarily to be construed as preferred or advantageous over other embodiments. Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, and other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

A reference to an element in the singular is not intended to mean "one and only one" unless specifically stated, but rather "one or more." The term "some" refers to one or more. Underlined and/or italicized headings and subheadings are used for convenience only, do not limit the subject technology, and are not referred to in connection with the interpretation of the description of the subject technology. Relational terms such as first and second and the like may be used to distinguish one entity or action from another without necessarily requiring or implying any actual such relationship or order between such entities or actions. All structural and functional equivalents to the elements of the various configurations described throughout this disclosure that are known or later come to be known to those of ordinary skill in the art are encompassed by the subject technology.

While this specification contains many specifics, these should not be construed as limitations on the scope of what may be described, but rather as descriptions of particular implementations of the subject matter. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially described as such, one or more features from a described combination can in some cases be excised from the combination, and the described combination may be directed to a subcombination or variation of a subcombination.

The subject matter of this specification has been described in terms of particular aspects, but other aspects can be implemented and are within the scope of the following claims. For example, while operations are depicted in the drawings in a particular order, this should not be understood as requiring that such operations be performed in the particular order shown or in sequential order, or that all illustrated operations be performed, to achieve desirable results. The actions recited in the claims can be performed in a different order and still achieve desirable results. As one example, the processes depicted in the accompanying figures do not necessarily require the particular order shown, or sequential order, to achieve desirable results. In certain circumstances, multitasking and parallel processing may be advantageous. Moreover, the separation of various system components in the aspects described above should not be understood as requiring such separation in all aspects, and it should be understood that the described program components and systems can generally be integrated together in a single software product or packaged into multiple software products.

## Claims

1.  A device, comprising:

    a near-eye display configured to provide an image to a subject;
    an eye imaging system configured to collect an image of the subject; and
    a light field display configured to provide an autostereoscopic image of a three-dimensional model of the subject to an onlooker, wherein the autostereoscopic image includes a perspective-corrected view of the subject from multiple viewpoints within a field of view of the light field display.

2.  The device of claim 1, wherein the light field display comprises a pixel array and a multi-lenslet array, wherein the pixel array is configured to provide a segmented view of the subject to the multi-lenslet array, the segmented view including multiple portions of the field of view of the light field display at a selected viewpoint.

3.  The device of claim 1 or claim 2, wherein the eye imaging system comprises two cameras to collect a binocular view of the subject.

4.  The device of any preceding claim, further comprising one or more processors and a memory storing instructions which, when executed by the one or more processors, generate a three dimensional representation of the subject from the image of the subject; and/or preferably wherein the near-eye display provides the subject a three-dimensional representation of an environment, including the onlooker.

5.  The device of any preceding claim, wherein the eye imaging system includes an infrared camera that receives the image from the subject in a reflective mode from a dichroic mirror adjacent to the light field display.

6.  The device of any preceding claim, wherein light field display comprises a micro lens array having multiple micro lenses arranged in a two-dimensional pattern having a pre-selected pitch to avoid cross-talk between the perspective-corrected view for two viewpoints, for the onlooker.

7.  The device of any of claims 1 to 5, wherein the light field display further comprises an immersed stop adjacent to a micro lens array, the immersed stop including multiple apertures such that each aperture is aligned with a center of each micro lens in the micro lens array.

8.  The device of claim 1, wherein the light field display includes a pixel array split in multiple active segments, wherein each active segment in the pixel array has a dimension corresponding to a diameter of a refractive element in a multi-lenslet array; and/or preferably further comprising one or more processors and a memory storing instructions which, when executed by the one or more processors, cause the light field display to split a pixel array into multiple active segments, each active segment configured to provide a portion of the field of view of the light field display at a selected viewpoint for the onlooker.

9.  A computer-implemented method, comprising:

    receiving, from one or more headset cameras, multiple images having at least two or more fields of view of a subject, wherein the subject is a headset user;
    extracting multiple image features from the images using a set of learnable weights;
    forming a three-dimensional model of the subject using the set of learnable weights;
    mapping the three-dimensional model of the subject onto an autostereoscopic display format that associates an image projection of the subject with a selected observation point for an onlooker; and
    providing, on a device display, the image projection of the subject when the onlooker is located at the selected observation point.

10. The computer-implemented method of claim 9, wherein extracting image features comprises extracting intrinsic properties of each of the headset cameras used to collect each of the images.

11. The computer-implemented method of claim 10 or claim 9, wherein mapping the three-dimensional model of the subject onto an autostereoscopic display format comprises interpolating a feature map associated with a first observation point with a feature map associated with a second observation point; or preferably wherein mapping the three-dimensional model of the subject onto an autostereoscopic display format comprises aggregating the image features for multiple pixels along a direction of the selected observation point; or preferably wherein mapping the three-dimensional model of the subject onto an autostereoscopic display format comprises concatenating multiple feature maps produced by each of the headset cameras in a permutation invariant combination, each of the headset cameras having an intrinsic characteristic.

12. The computer-implemented method of claim 11, wherein providing the image projection of the subject comprises providing, on the device display, a second image projection as the onlooker moves from the first observation point to the second observation point.

13. A computer-implemented method for training a three-dimensional model of a subject to provide a view of the subject to an auto stereoscopic display in a virtual reality headset including generating multiple synthetic views, comprising:

collecting, from a face of multiple users, multiple ground-truth images;
rectifying the ground-truth images with stored, calibrated stereoscopic pairs of images;
mapping the three-dimensional model of the subject onto an autostereoscopic display format that associates an image projection of the subject with a selected observation point for an onlooker;
determining a loss value based on a difference between the ground-truth images and the image projection of the subject; and
updating the three-dimensional model of the subject based on the loss value.

14. The computer-implemented method of claim 13, wherein generating multiple synthetic views comprises projecting image features from each of the ground-truth images along a selected observation direction and concatenating multiple feature maps produced by each of the ground-truth images in a permutation invariant combination, each of the ground-truth images having an intrinsic characteristic; and/or preferably wherein training the three-dimensional model of the subject comprises updating at least one in a set of learnable weights for each of multiple features based on a value of a loss function indicative of the difference between the ground-truth images and the image projection of the subject; or preferably wherein training the three-dimensional model of the subject comprises training a background value for each of multiple pixels in the ground-truth images based on a pixel background value projected from the multiple ground-truth images.

**Patentansprüche**

1. Eine Vorrichtung, die Folgendes beinhaltet:

eine augennahe Anzeige, die dazu konfiguriert ist, einem Subjekt ein Bild bereitzustellen;
ein Augenabbildungssystem, das dazu konfiguriert ist, ein Bild des Subjekts zu erfassen; und
eine Lichtfeldanzeige, die dazu konfiguriert ist, einem Betrachter ein autostereoskopisches Bild eines dreidimensionalen Modells des Subjekts bereitzustellen, wobei das autostereoskopische Bild eine perspektivkorrigierte Sicht des Subjekts aus mehreren Sichtpunkten innerhalb eines Sichtfelds der Lichtfeldanzeige umfasst.

2. Anzeige gemäß Anspruch 1, wobei die Lichtfeldanzeige ein Pixel-Array und ein Multi-Lenslet-Array beinhaltet, wobei das Pixel-Array dazu konfiguriert ist, dem Multi-Lenslet-Array eine segmentierte Sicht des Subjekts bereitzustellen, wobei die segmentierte Sicht mehrere Abschnitte des Sichtfelds der Lichtfeldanzeige an einem ausgewählten Sichtpunkt umfasst.

3. Anzeige gemäß Anspruch 1 oder Anspruch 2, wobei das Augenabbildungssystem zwei Kameras beinhaltet, um eine binokulare Sicht des Subjekts zu erfassen.

4. Anzeige gemäß einem vorhergehenden Anspruch, die ferner Folgendes beinhaltet:

einen oder mehrere Prozessoren und einen Speicher, der Anweisungen speichert, die, wenn sie von dem einen oder den mehreren Prozessoren ausgeführt werden, eine dreidimensionale Darstellung des Subjekts aus dem Bild des Subjekts generieren;

und/oder bevorzugt wobei die augennahe Anzeige dem Subjekt eine dreidimensionale Darstellung einer Umgebung, die den Betrachter umfasst, bereitstellt.

5. Anzeige gemäß einem vorhergehenden Anspruch, wobei das Augenabbildungssystem eine Infrarotkamera umfasst, die das Bild von dem Subjekt in einem reflektiven Modus von einem an die Lichtfeldanzeige angrenzenden dichroitischen Spiegel empfängt.

6. Anzeige gemäß einem vorhergehenden Anspruch, wobei die Lichtfeldanzeige ein Mikrolinsen-Array beinhaltet, das mehrere Mikrolinsen aufweist, die in einem zweidimensionalen Muster mit einem vorausgewählten Abstand angeordnet sind, um ein Übersprechen zwischen der perspektivkorrigierten Sicht für zwei Sichtpunkte, für den Betrachter, zu vermeiden.

7. Anzeige gemäß einem der Ansprüche 1 bis 5, wobei die Lichtfeldanzeige ferner einen an ein Mikrolinsen-Array angrenzenden versenkten Stopp beinhaltet, wobei der versenkte Stopp mehrere Blenden umfasst, sodass jede Blende auf ein Zentrum von jeder Mikrolinse in dem Mikrolinsen-Array ausgerichtet ist.

8. Anzeige gemäß Anspruch 1, wobei die Lichtfeldanzeige ein in mehrere aktive Segmente gespaltenes Pixel-Array umfasst, wobei jedes aktive Segment in dem Pixel-Array eine Abmessung aufweist, die einem Durchmesser eines refraktiven Elements in einem Multi-Lenslet-Array entspricht;
und/oder die bevorzugt ferner Folgendes beinhaltet: einen oder mehrere Prozessoren und einen Speicher, der Anweisungen speichert, die, wenn sie von dem einen oder den mehreren Prozessoren ausgeführt werden, veranlassen, dass die Lichtfeldanzeige ein Pixel-Array in mehrere aktive Segmente spaltet, wobei jedes aktive Segment dazu konfiguriert ist, einen Abschnitt des Sichtfelds der Lichtfeldanzeige an einem ausgewählten Sichtpunkt für den Betrachter bereitzustellen.

9. Ein rechnerimplementiertes Verfahren, das Folgendes beinhaltet:

   Empfangen, von ein oder mehreren Headset-Kameras, mehrerer Bilder, die mindestens zwei oder mehrere Sichtfelder eines Subjekts aufweisen, wobei das Subjekt ein Headset-Benutzer ist;
   Extrahieren mehrerer Bildmerkmale aus den Bildern unter Verwendung eines Satzes lernbarer Gewichtungen;
   Bilden eines dreidimensionalen Modells des Subjekts unter Verwendung des Satzes lernbarer Gewichtungen;
   Mapping des dreidimensionalen Modells des Subjekts auf ein autostereoskopisches Anzeigeformat, das eine Bildprojektion des Subjekts mit einem ausgewählten Beobachtungspunkt für einen Betrachter assoziiert; und
   Bereitstellen, auf einer Vorrichtungsanzeige, der Bildprojektion des Subjekts, wenn sich der Betrachter an dem ausgewählten Beobachtungspunkt befindet.

10. Rechnerimplementiertes Verfahren gemäß Anspruch 9, wobei das Extrahieren von Bildmerkmalen das Extrahieren intrinsischer Eigenschaften von jeder der Headset-Kameras beinhaltet, die zum Erfassen von jedem der Bilder verwendet werden.

11. Rechnerimplementiertes Verfahren gemäß Anspruch 10 oder Anspruch 9, wobei das Mapping des dreidimensionalen Modells des Subjekts auf ein autostereoskopisches Anzeigeformat das Interpolieren einer Merkmalmap, die mit einem ersten Beobachtungspunkt assoziiert ist, mit einer Merkmalmap, die mit einem zweiten Beobachtungspunkt assoziiert ist, beinhaltet; oder bevorzugt wobei das Mapping des dreidimensionalen Modells des Subjekts auf ein autostereoskopisches Anzeigeformat das Aggregieren der Bildmerkmale für mehrere Pixel entlang einer Richtung des ausgewählten Beobachtungspunkts beinhaltet; oder bevorzugt wobei das Mapping des dreidimensionalen Modells des Subjekts auf ein autostereoskopisches Anzeigeformat das Vereinigen mehrerer Merkmalmaps, die von jeder der Headset-Kameras produziert werden, in einer Permutationsinvariantenkombination beinhaltet, wobei jede der Headset-Kameras ein intrinsisches Kennzeichen aufweist.

12. Rechnerimplementiertes Verfahren gemäß Anspruch 11, wobei das Bereitstellen der Bildprojektion des Subjekts das Bereitstellen, auf der Vorrichtungsanzeige, einer zweiten Bildprojektion beinhaltet, wenn sich der Betrachter von dem ersten Beobachtungspunk zu dem zweiten Beobachtungspunk bewegt.

13. Ein rechnerimplementiertes Verfahren zum Trainieren eines dreidimensionalen Modells eines Subjekts, um einer autostereoskopischen Anzeige in einem Virtual-Reality-Headset eine Sicht des Subjekts bereitzustellen, das das Generieren mehrerer synthetischer Sichten umfasst, Folgendes beinhaltend:

Erfassen, von einem Gesicht von mehreren Benutzern, mehrerer Ground-Truth-Bilder;

Berichtigen der Ground-Truth-Bilder mit gespeicherten, kalibrierten stereoskopischen Bildpaaren;

Mapping des dreidimensionalen Modells des Subjekts auf ein autostereoskopisches Anzeigeformat, das eine Bildprojektion des Subjekts mit einem ausgewählten Beobachtungspunkt für einen Betrachter assoziiert;

Bestimmen eines Verlustwerts basierend auf einer Differenz zwischen den Ground-Truth-Bildern und der Bildprojektion des Subjekts; und

Aktualisieren des dreidimensionalen Modells des Subjekts basierend auf dem Verlustwert.

14. Rechnerimplementiertes Verfahren gemäß Anspruch 13, wobei das Generieren mehrerer synthetischer Sichten das Projizieren von Bildmerkmalen von jedem der Ground-Truth-Bilder entlang einer ausgewählten Beobachtungsrichtung und das Vereinigen mehrerer Merkmalmaps, die von jeder der Headset-Kameras produziert werden, in einer Permutationsinvariantenkombination beinhaltet, wobei jedes der Ground-Truth-Bilder ein intrinsisches Kennzeichen aufweist; und/oder bevorzugt wobei das Trainieren des dreidimensionalen Modells des Subjekts das Aktualisieren mindestens einer in einem Satz lernbarer Gewichtungen für jedes von mehreren Merkmalen basierend auf einem Wert einer Verlustfunktion beinhaltet, der die Differenz zwischen den Ground-Truth-Bildern und der Bildprojektion des Subjekts angibt; oder bevorzugt wobei das Trainieren des dreidimensionalen Modells des Subjekts das Trainieren eines Hintergrundwerts für jedes von mehreren Pixeln in den Ground-Truth-Bildern basierend auf einem Pixelhintergrundwert beinhaltet, der von den mehreren Ground-Truth-Bildern projiziert wird.

**Revendications**

1. Un dispositif, comprenant :

une unité d'affichage proche de l'œil configurée pour fournir une image à un sujet ;

un système d'imagerie oculaire configuré pour collecter une image du sujet ; et

une unité d'affichage à champ lumineux configurée pour fournir une image autostéréoscopique d'un modèle tridimensionnel du sujet à un spectateur, où l'image autostéréoscopique inclut une vue à correction de perspective du sujet à partir de points de vue multiples au sein d'un champ de vision de l'unité d'affichage à champ lumineux.

2. Le dispositif de la revendication 1, où l'unité d'affichage à champ lumineux comprend un réseau de pixels et un réseau multi-microlentilles, où le réseau de pixels est configuré pour fournir une vue segmentée du sujet au réseau multi-microlentilles, la vue segmentée incluant des portions multiples du champ de vision de l'unité d'affichage à champ lumineux au niveau d'un point de vue sélectionné.

3. Le dispositif de la revendication 1 ou la revendication 2, où le système d'imagerie oculaire comprend deux caméras pour collecter une vue binoculaire du sujet.

4. Le dispositif de n'importe quelle revendication précédente, comprenant en outre un ou plusieurs processeurs et une mémoire stockant des instructions qui, lorsqu'elles sont exécutées par les un ou plusieurs processeurs, génèrent une représentation tridimensionnelle du sujet à partir de l'image du sujet ; et/ou de préférence où l'unité d'affichage proche de l'œil fournit au sujet une représentation tridimensionnelle d'un environnement, le spectateur inclus.

5. Le dispositif de n'importe quelle revendication précédente, où le système d'imagerie oculaire inclut une caméra infrarouge qui reçoit l'image provenant du sujet dans un mode réfléchissant à partir d'un miroir dichroïque adjacent à l'unité d'affichage à champ lumineux.

6. Le dispositif de n'importe quelle revendication précédente, où l'unité d'affichage à champ lumineux comprend un réseau de micro-lentilles ayant des micro-lentilles multiples agencées selon un motif bidimensionnel ayant un pas présélectionné afin d'éviter une interférence entre la vue à correction de perspective pour deux points de vue, pour le spectateur.

7. Le dispositif de n'importe lesquelles des revendications 1 à 5, où l'unité d'affichage à champ lumineux comprend en outre un arrêt en enfoncement adjacent à un réseau de micro-lentilles, l'arrêt en enfoncement incluant des ouvertures multiples de telle sorte que chaque ouverture est alignée sur un centre de chaque micro-lentille dans le réseau de micro-lentilles.

8. Le dispositif de la revendication 1, où l'unité d'affichage à champ lumineux inclut un réseau de pixels scindé en segments actifs multiples, où chaque segment actif dans le réseau de pixels a une dimension correspondant à un diamètre d'un élément réfractif dans un réseau multi-microlentilles ; et/ou de préférence comprenant en outre un ou plusieurs processeurs et une mémoire stockant des instructions qui, lorsqu'elles sont exécutées par les un ou plusieurs processeurs, amènent l'unité d'affichage à champ lumineux à scinder un réseau de pixels en segments actifs multiples, chaque segment actif étant configuré pour fournir une portion du champ de vision de l'unité d'affichage à champ lumineux au niveau d'un point de vue sélectionné pour le spectateur.

9. Un procédé mis en œuvre par ordinateur, comprenant :

la réception, en provenance d'une ou de plusieurs caméras de casque, d'images multiples ayant au moins deux ou plus de deux champs de vision d'un sujet, où le sujet est un utilisateur de casque ;
l'extraction d'attributs d'image multiples des images en utilisant un ensemble de poids apprenables ;
la formation d'un modèle tridimensionnel du sujet en utilisant l'ensemble de poids apprenables ;
la cartographie du modèle tridimensionnel du sujet sur un format pour unité d'affichage autostéréoscopique qui associe une projection d'image du sujet à un point d'observation sélectionné pour un spectateur ; et
la fourniture, sur une unité d'affichage de dispositif, de la projection d'image du sujet lorsque le spectateur se trouve au niveau du point d'observation sélectionné.

10. Le procédé mis en œuvre par ordinateur de la revendication 9, où l'extraction d'attributs d'image comprend l'extraction de propriétés intrinsèques de chacune des caméras de casque utilisées pour collecter chacune des images.

11. Le procédé mis en œuvre par ordinateur de la revendication 10 ou la revendication 9,
où la cartographie du modèle tridimensionnel du sujet sur un format pour unité d'affichage autostéréoscopique comprend l'interpolation d'une carte d'attributs associée à un premier point d'observation avec une carte d'attributs associée à un deuxième point d'observation ; ou de préférence où la cartographie du modèle tridimensionnel du sujet sur un format pour unité d'affichage autostéréoscopique comprend l'agrégation des attributs d'image pour des pixels multiples le long d'une direction du point d'observation sélectionné ; ou de préférence où la cartographie du modèle tridimensionnel du sujet sur un format pour unité d'affichage autostéréoscopique comprend la concaténation de cartes d'attributs multiples produites par chacune des caméras de casque en une combinaison d'invariants par permutation, chacune des caméras de casque ayant une caractéristique intrinsèque.

12. Le procédé mis en œuvre par ordinateur de la revendication 11, où la fourniture de la projection d'image du sujet comprend la fourniture, sur l'unité d'affichage de dispositif, d'une deuxième projection d'image tandis que le spectateur se déplace du premier point d'observation au deuxième point d'observation.

13. Un procédé mis en œuvre par ordinateur pour l'entraînement d'un modèle tridimensionnel d'un sujet afin de fournir une vue du sujet à une unité d'affichage autostéréoscopique dans un casque de réalité virtuelle incluant la génération de vues synthétiques multiples, comprenant :

la collecte, à partir d'un visage d'utilisateurs multiples, d'images de vérité de terrain multiples ;
la rectification des images de vérité de terrain avec des paires d'images,
stéréoscopiques calibrées, stockées ;
la cartographie du modèle tridimensionnel du sujet sur un format pour unité d'affichage autostéréoscopique qui associe une projection d'image du sujet à un point d'observation sélectionné pour un spectateur ;
la détermination d'une valeur de perte sur la base d'une différence entre les images de vérité de terrain et la projection d'image du sujet ; et
la mise à jour du modèle tridimensionnel du sujet sur la base de la valeur de perte.

14. Le procédé mis en œuvre par ordinateur de la revendication 13, où la génération de vues synthétiques multiples comprend la projection d'attributs d'image provenant de chacune des images de vérité de terrain le long d'une direction d'observation sélectionnée et la concaténation de cartes d'attributs multiples produites par chacune des images de vérité de terrain en une combinaison d'invariants par permutation, chacune des images de vérité de terrain ayant une caractéristique intrinsèque ; et/ou de préférence où l'entraînement du modèle tridimensionnel du sujet comprend la mise à jour d'au moins l'un parmi un ensemble de poids apprenables pour chacun parmi des attributs multiples sur la base d'une valeur d'une fonction de perte indicative de la différence entre les images de vérité de terrain et la projection d'image du sujet ; ou de préférence où l'entraînement du modèle tridimensionnel du sujet comprend l'entraînement d'une valeur d'arrière-plan pour chacun parmi des pixels multiples dans les images de vérité de terrain sur la base d'une valeur d'arrière-plan de pixels projetée provenant des images de vérité de terrain multiples.

**FIG. 1A**

EP 4 260 129 B1

FIG. 1B

22

FIG. 2

FIG. 3A

EP 4 260 129 B1

FIG. 3B

25

FIG. 3C

FIG. 3D

FIG. 4

EP 4 260 129 B1

FIG. 5A

FIG. 5B

FIG. 5C

FIG. 5D

FIG. 6

**FIG. 7**

EP 4 260 129 B1

FIG. 8A

833-1B

833-2B

FIG. 8B

EP 4 260 129 B1

833C

800

FIG. 8C

FIG. 8D

900

902 — Receive, from one or more headset cameras, multiple images having at least two or more fields of view of a subject, wherein the subject is a headset user

904 — Extract multiple image features from the images using a set of learnable weights

906 — Form a three-dimensional model of the subject using the learnable weights

908 — Map the three-dimensional model of the subject onto an autostereoscopic display format that associates an image projection of the subject with a selected observation point for an onlooker

910 — Provide, on the display, the image projection of the subject when the onlooker is located at the selected observation point

FIG. 9

1000

1002

Collect, from a face of multiple users, multiple ground-truth images

1004

Rectify the ground-truth images with stored, calibrated stereoscopic pairs of images

1006

Map the three-dimensional model of the subject onto an autostereoscopic display format that associates an image projection of the subject with a selected observation point for an onlooker

1008

Determine a loss value based on a difference between the ground-truth images and the image projection of the subject

1010

Update the three-dimensional model of the subject based on the loss value

FIG. 10

1100

1102 — Collect, from a face of multiple users, multiple ground-truth images

1104 — Rectify the ground-truth images with stored, calibrated stereoscopic pairs of images

1106 — Generate, with a three-dimensional face model, multiple synthetic views of the face of the users, wherein the synthetic views of the face of the users include an interpolation of multiple feature maps projected along different directions corresponding to the views of the face of the users

1108 — Train the three-dimensional face model based in a difference between the ground-truth images and the synthetic views of the face of the users

FIG. 11

1200

1202

1204

1206

| Processor | Memory | Data Storage |

1208

BUS

Input/Output Module

1210

1212

1214

1216

| Communications Module | Device | Device |

FIG. 12

**EP 4 260 129 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9740282 B1
- WO 2018005331 A1